# EUROPEAN PATENT SPECIFICATION

(11) **EP 1 491 411 B1**
(45) Date of publication and mention of the grant of the patent: **24.05.2006**
(21) Application number: 04014606.0
(22) Date of filing: 22.06.2004
(51) Int. Cl.: B60R 21/20, B60R 21/16

(54) **Head-protecting airbag device**
Kopfschutz-Airbagvorrichtung
Dispositif d'airbag pour la protection de la tête

(30) Priority: 23.06.2003 JP 2003178114; 23.06.2003 JP 2003178094
(43) Date of publication of application: 29.12.2004
(73) Proprietor: TOYODA GOSEI CO., LTD., Nishikasugai-gun, Aichi 452-8564 (JP)
(72) Inventor: Totani, Chiharu c/o TOYODA GOSEI CO., LTD., Nishikasugai-gun, Aichi, 452-8564 (JP); Okada, Masayasu c/o TOYODA GOSEI CO., LTD., Nishikasugai-gun, Aichi, 452-8564 (JP); Tanaka, Atsunosuke c/o TOYODA GOSEI CO., LTD., Nishikasugai-gun, Aichi, 452-8564 (JP); Tanase, Toshinori c/o TOYODA GOSEI CO., LTD., Nishikasugai-gun, Aichi, 452-8564 (JP); Oguchi, Shinji c/o TOYODA GOSEI CO., LTD., Nishikasugai-gun, Aichi, 452-8564 (JP); Nawashiro, Mitsuhiro c/o TOYODA GOSEI CO., LTD., Nishikasugai-gun, Aichi, 452-8564 (JP)
(74) Representative: TBK-Patent

(56) References cited:
- EP-A- 1 057 697
- EP-A- 1 153 807
- US-B1- 6 332 628
- US-E- R E38 125

## Description

### BACKGROUND OF THE INVENTION

### 1. FIELD OF THE INVENTION

The present invention relates to a head- protecting airbag device mountable on an automobile, and more particularly, relates to a head-protecting airbag device whose airbag is normally folded and disposed inside the vehicle from a front pillar on to a roof side rail along the upper peripheries of a plurality of side windows while being covered by an airbag cover.

### 2. DESCRIPTION OF RELATED ART

Conventionally, in a head-protecting airbag device of this kind, a folded airbag is disposed inside a vehicle from the upper edge of a side window for the front seat to the upper edge of a side window for the rear seat, over the center pillar, as disclosed in Japanese Laid-Open Patent Application No. 2001-334902.

This folded airbag is covered at its interior side with an airbag cover, which is formed separately from the roof head lining and is located below the roof head lining. The airbag cover includes a door portion in its lower part which is openable inward when pushed by the inflating airbag.

However, the conventional airbag cover is formed separately from a front pillar garnish which covers the interior side of the front pillar in the vicinity of the front side window. Accordingly, a parting line between the airbag cover and the front pillar garnish easily comes in sight of vehicle occupants including a driver seated in the front seat, and therefore, there is a room for improvement in the appearance of interior of the vehicle.

Document EP1153807 discloses a head protection air bag apparatus which comprises an air bag, an air bag cover for covering the air bag, an inflator for supplying the air bag with gas for inflation, and an assist grip. The inflator is fixed to a body of a vehicle at a location toward the exterior side of a vehicle relative to the assist grip. The assist grip is provided on its exterior surface with a cover layer having the characteristic of a cushion, so that an impact with the inflator will be cushioned by the assist grip.

### SUMMARY OF THE INVENTION

The present invention contemplates to solve the above mentioned problem. It is the object of the invention to provide a head-protecting airbag device which has an improved appearance in the side of the front seat.

The object is achieved by a head-protecting airbag device according to claim 1. Advantageous modifications are carried out according to the dependent claims.

In the head-protecting airbag device according to the present invention, an airbag is folded and arranged inside a vehicle from a front pillar on to a roof side rail in the upper peripheries of a plurality of side windows while being covered by an airbag cover. The airbag inflates when fed with inflation gas, pushes open a door portion formed in the lower periphery of the airbag cover, and then protrudes for covering the side windows. The airbag cover is located below a roof head lining and formed separately from the roof head lining. The airbag cover includes a plurality of parts split in the front-rear direction. The split part located foremost covers the interior side of the front pillar, and is extensively located up to an area rearward of an intersection of the front pillar and the roof side rail.

In the head-protecting airbag device of the present invention, the foremost split part as constituent part of the airbag cover locates its parting line with the following split part rearward of the intersection of the front pillar and the roof side rail, as well as serving as a front pillar garnish for covering the interior side of the front pillar. That is, the parting line between the split parts of the airbag cover is located rearward of a parting position conventionally located near the intersection of the front pillar and the roof side rail, so that the parting line does not easily come in sight of an occupant seated in the front seat. Especially when the occupant drives straight forward and looks forward, the parting line beyond the intersection of the front pillar and the roof side rail does not easily come in his sight.

Therefore, the head-protecting airbag device of the present invention provides an improved appearance in the side of the front seat since the parting line of the split parts of the airbag cover disposed from the front pillar on to the roof side rail is located rearward.

The parting line between the foremost split part and the following split part is desirably located near the occupant's head seated in the front seat, or rearward of the occupant's head, such as in the vicinity of a middle pillar. With this arrangement, the parting line hardly comes in sight of the occupant when driving straight forward and looking forward.

The head-protecting airbag device of the present invention is composed of more than one parts split in the front-rear direction. Therefore, although the airbag cover for covering the folded airbag is elongate and located lengthily from the front pillar and all along the roof side rail in the upper periphery of the side windows between the roof head lining and the side windows inside of the vehicle, the airbag cover is easy to manufacture, store, transport, and handle.

The rearmost split part of the airbag cover is desirably constructed to cover at least an upper part of a rear pillar inside the vehicle.

With this arrangement, the airbag cover is disposed from the front pillar through the upper part of the rear pillar, and thus an entire area between the roof head lining and the side windows including the front pillar brings in a sense of unity. Therefore, the appearance inside the vehicle is improved. In the rear pillar, moreover, since the upper part of the rear pillar garnish for covering the interior is constructed as the airbag cover, too, it is possible, upon airbag deployment, to locate the airbag in the interior of the lower part of the rear pillar garnish. Therefore, an occupant positioned in the interior of the rear pillar is easily protected by the inflated airbag.

When at least one assist grip provided in its front and rear ends with fixing portions for fixation to the vehicle body is located in the arrangement area of the airbag cover, it is desired that the front and rear fixing portions of the assist grip are located across contiguous end portions of contiguous split parts of the airbag cover, and that the contiguous end portions of the split parts are secured to the vehicle body together when the fixing portions are fixed to the vehicle body.

With this arrangement, the end portions of the contiguous split parts are also secured to the vehicle body when the fixing portions of the assist grip are secured to the vehicle body. Accordingly, means and processes for fixing the split parts to the vehicle body are reduced. Of course, since the fixing portions located at the ends of the assist grip secure the end portions of the contiguous split parts to the vehicle body, the end portions of the split parts do not unnecessarily project toward the interior when the door portion opens. In addition, since the parting line of the contiguous split parts is partially hidden by the grip portion of the assist grip, the appearance is improved.

In this case, each of the fixing portions of the assist grip desirably includes a retaining piece which is detachably fixed to an inner panel of the vehicle body by being inserted into a mounting hole in the inner panel. With this arrangement, the fixing portions of the assist grip are fixed to the vehicle body only by inserting the retaining pieces of the fixing portions into the mounting holes of the inner panel, so that the fixing work of the split parts and assist grip to the vehicle body is facilitated. Since the retaining pieces are detachable, the assist grip can be detached from the vehicle body easily in occasions of maintenance and so on.

When the airbag cover includes more than two parts split in the front-rear direction, it is sufficient that the abovementioned assist grip is located in the end portions of at least one pair of contiguous split parts. The end portions of other pairs of split parts may be fixed to the vehicle body by different kinds of assist grips, or may be fixed by a different means not an assist grip. Of course, however, if all the contiguous split parts are provided at the end portions with the abovementioned assist grips, means and processes for fixing the split parts constituting the airbag cover entirely to the vehicle body are further reduced.

It will also be appreciated that the airbag, an inflator for feeding the airbag with inflation gas, and at least one of the split parts are assembled into an airbag module, and the airbag, the inflator and the split part are mounted on the vehicle by attaching the airbag module to the vehicle.

This arrangement enables reduction of tact time per vehicle in comparison with a case of mounting the individual parts separately on vehicle, and also facilitates transportation and storage since the individual parts can be handled as a unit.

In this case, if the airbag is provided with a plurality of mounting portions each of which has a mounting hole for attaching the airbag to the vehicle body, it is desired that one of the split parts as constituent part of the airbag module includes a plurality of mounting members detachably fixed to the inner panel of the vehicle body together with the mounting portions of the airbag. Each of these mounting members is secured to the inner panel by being inserted into the mounting hole of the mounting portion of the airbag, thereby retaining the airbag mounting portion, and by then being inserted into a mounting hole in the inner panel.

With this arrangement, the airbag and the split part in the airbag module are fixed to the inner panel as a unit utilizing the mounting members of the split part, so that means and processes for fixing the airbag module are reduced. Moreover, the airbag and the split part are fixed to the vehicle body only by inserting the mounting members of the split part into the mounting holes of the inner panel, so that the fixing work of the airbag module to the vehicle body is facilitated. Of course, since the mounting members of the split part are detachable, the split part can be detached from the vehicle body easily in occasions of maintenance and so on.

The same split part may include a second mounting member detachably fixed to the inner panel of the vehicle body without involving the mounting portion of the airbag. This second mounting member is fixed to the inner panel by being inserted into a mounting hole of the inner panel. This arrangement stabilizes the fixation of the split part to the vehicle body since the split part is secured to the inner panel by the second mounting member at an additional position other than the mounting portions of the airbag. The second mounting member also facilitates the fixing work of the split part to the vehicle body since it is easily fixed to the vehicle body by only being inserted into the mounting hole of the inner panel. Moreover, the second mounting member can be detached from the vehicle body easily in occasions of maintenance and so on, since it is detachable.

It is desired that an end portion of one of the contiguous split parts overlaps an end portion of the other split part on the interior side.

With this arrangement, since the end portions of the contiguous split parts overlap each other in exterior-interior direction, the split parts are not easily separated from each other in the front-rear direction and no gaps arise therebetween, and therefore, unity in the appearance in the length direction of the airbag cover is improved. Moreover, with this arrangement, out of the end portions of the contiguous split parts, the unexposed end portion is held by the other end portion exposed toward the interior, and thus obtains a high rigidity. Accordingly, the unexposed end portion is prevented from being unnecessarily twisted toward the interior following the opening of the door portion even if a fixing position of the unexposed end portion to the vehicle body is not located close to the edge of the unexposed end portion in the front-rear direction. Out of the end portions of the contiguous split parts, the other end portion exposed toward the interior can also be prevented from projecting toward the interior unnecessarily, if its fixing position to the vehicle body is located close to its edge in the front-rear direction.

In this case, the end portions of contiguous split parts may be provided with a pair of fitting portions which are fittable to each other, such that the end portions are prevented from shifting in the vertical and the exterior-interior direction. This arrangement is further able to enhance the rigidity of the coupled end portions, and therefore, fixing positions of the end portions to the vehicle body do not necessarily have to be located close to edges, or to be made tightly. As a result, means and processes for fixing the entire airbag cover to the vehicle body are reduced. Moreover, the end portions are easy to couple with only by setting one fitting portion into the other, which facilitates the mounting work of the split parts on the vehicle.

When the inflator for feeding the airbag with inflation gas is secured to the vehicle body by at least two mounting portions located in its front and rear, the contiguous end portions of a pair of split parts may be fixed to the vehicle body together when the two front and rear mounting portions of the inflator are fixed to the vehicle body.

This arrangement is able to reduce means and processes for fixing the split parts to the vehicle body, since the contiguous end portions of the split parts are fixed together with the front and rear mounting portions of the inflator. Of course, since the mounting portions of the inflator help secure the contiguous end portions of the split parts to the body together with the inflator, the end portions of the split parts do not necessarily project inward when the door portion opens.

The following arrangement will also be appreciated: the head-protecting airbag device includes a joint portion which is formed separately from the split parts and is located between any pair of contiguous split parts. Each of the contiguous split parts includes: a main body with the door portion for covering the interior side of the airbag; and a mounting portion projecting in the front-rear direction from an edge portion of the main body toward the joint portion to be fixed to the vehicle body. The joint portion includes: a mounting portion to be fixed to the vehicle body; and a cover portion for covering the interior side of the mounting portions of the contiguous split parts. The cover portion opens upon airbag deployment for allowing the airbag to protrude toward the vehicle's interior together with the main bodies of the split parts.

With this arrangement, these contiguous split parts are secured to the vehicle body by the mounting portions projecting forward or rearward from the vicinities of edges of respective main bodies toward the joint portion. In other words, by securing the mounting portions of the split parts to the vehicle body, each of the edges of the main bodies of the contiguous split parts toward the joint portion are prevented from opening along the horizontal direction, i.e., the rear edge of the front split part is prevented from riding up forward, or the front edge of the rear split part is prevented from riding up rearward. Consequently, the edges of the main bodies of the split parts toward the joint portion are prevented from being deformed and opening along the horizontal direction upon airbag deployment, and the edges are suppressed from being twisted. Therefore, the door portions of the split parts are able to open smoothly, and the airbag is able to protrude toward the interior smoothly.

With this arrangement, moreover, the mounting portions formed in the vicinities of respective edges of the split parts toward the joint portion are projected in the front or rear direction from the edges of the main bodies. That is, without the cover portion of the joint portion, the mounting portions are projected from the main bodies and exposed toward the interior, so that fixing work of the mounting portions to the vehicle body isfacilitated. In addition,the mounting portions, after being fixed, are covered at the interior sides by the cover portion of the joint portion. Accordingly, the mounting portions are not visible from the interior, so that the appearance from the interior is good. Since the cover portion of the joint portion is openable for allowing the airbag to protrude toward the interior in cooperation with the main bodies of the split parts upon airbag deployment, the cover portion opens smoothly together with the main bodies of the split parts upon deployment of the airbag.

In the head-protecting airbag device constructed as described above, therefore, the airbag cover (or the split parts) is able to open smoothly upon airbag deployment, even in a condition that the airbag cover is formed separately from the roof head lining, and is constructed of a plurality of parts split in the front-rear direction.

Here, if an edge of the split part in the front-rear direction is deformed to open along horizontal direction, the edge is deformed in a twisting manner, so that a lower edge portion of the split part away from the edges in the front-rear direction, or a deformed portion around the bent point is deformed toward the exterior, which may hinder the airbag's protrusion to the interior.

In the abovementioned head-protecting airbag device, it is desired that the mounting portion of the joint portion is secured to the vehicle body together with the mounting portions of the contiguous split parts.

This arrangement is able to reduce number of parts and manufacturing processes and its cost, since the fixing member for fixing the mounting portion of the joint portion can be used as the fixing member for fixing the mounting portions of the split parts.

When the abovementioned head-protecting airbag device is arranged in upper peripheries of a plurality of side windows juxtaposed in the front-rear direction with a middle pillar located therebetween, the joint portion is desirably located above the middle pillar.

Inside the middle pillar is a pillar garnish protruded toward the interior than the side windows located therearound, and therefore, a part of the airbag disposed above the middle pillar expands largely toward the interior so as not to be interfered with the upper end of the pillar garnish utilizing a restraining member or the like. In the head-protecting airbag device constructed as above, however, the edges of the contiguous split parts located above the middle pillar and toward the joint portion are secured to the vehicle body. Therefore, even if the airbag protrudes toward the interior forcefully, the edges of the contiguous split parts toward the joint portion are prevented from being deformed to open along the horizontal direction, and the airbag cover (or the split parts) is able to open smoothly.

When the head-protecting airbag device is constructed as above, if the dimension of the cover portion of the joint portion in the front-rear direction is substantially the same as the dimension of the vicinity of the upper edge of the pillar garnish in the front-rear direction, the front and rear edges of the pillar garnish and the front and rear edges of the joint portion are aligned, which improves the appearance as viewed from the interior.

Furthermore, it will also be appreciated that each of the contiguous split parts is provided in its edge portion toward the joint portion with a fin formed integrally with a main body of the split part above the door portion to abut against the exterior side of the cover portion. With this arrangement, even if a gap arises between the main bodies of the split parts and the joint portion, the fins prevent the mounting portions from being exposed toward the interior from the gap. Moreover, since the fins abut against the exterior side of the edge portions of the cover portion, the entire cover portion is prevented from recessing toward the exterior, and the appearance is kept good.

### BRIEF DESCRIPTION OF DRAWINGS

Fig. 1 is a front view of a first embodiment of the head-protecting airbag device according to the present invention, as viewed from the vehicle's interior;
Fig. 2 is a sectional view taken along line II-II in Fig. 1;
Fig. 3 is a sectional view taken along line III-III in Fig. 1;
Fig. 4 is a partial enlarged section of Fig. 3 showing a fixed state of the airbag cover;
Fig. 5 is a sectional view taken along line V-V in Fig. 1;
Fig. 6 is an enlargement of Fig. 5 showing the vicinity of an assist grip;
Fig. 7 is a sectional view taken along line VII-VII in Fig. 1;
Fig. 8 is a sectional view taken along line VIII-VIII in Fig. 1;
Fig. 9 is a sectional view taken along line IX-IX in Fig. 1;
Fig. 10 is a front view of an airbag used in the airbag device in Fig. 1, as flatly expanded;
Fig. 11 shows an airbag module and other major constituent parts of the airbag device in Fig. 1, as viewed from front;
Figs. 12A and 12B are sectional views showing an attaching manner of the airbag module in Fig. 11 to the vehicle, which correspond to line XII-XII in Fig. 11;
Figs. 13A, 13B and 13C are sectional views showing an attaching manner of the airbag module in Fig. 11 to the vehicle, which correspond to line XIII-XIII in Fig. 11;
Fig. 14 is a sectional view showing an attaching manner of the airbag module in Fig. 11 to the vehicle, which corresponds to line XIV-XIV in Fig. 11;
Fig. 15 is a sectional view showing a modification of the fixing manner of an airbag cover of the first embodiment to the vehicle body;
Fig. 16 is a sectional view of the airbag cover of Fig. 15 before being fixed to the vehicle boy;
Fig. 17 is a front view of a second embodiment of the head-protecting airbag device of the present invention, as viewed from the vehicle's interior;
Fig. 18 shows an airbag module and other major constituent parts of the airbag device in Fig. 17, as viewed from front;
Fig. 19 illustrates an attaching manner of an assist grip of the airbag device in Fig. 17 to the vehicle, which corresponds to line XIX-XIX in Fig. 18;
Fig. 20 is a sectional view taken along line XX-XX in Fig. 17;
Fig. 21 is a front view of a third embodiment of the head-protecting airbag device of the present invention, as viewed from the vehicle's interior;
Fig. 22 is a sectional view taken along line XXII-XXII in Fig. 21;
Fig. 23 is a sectional view taken along line XXIII-XXIII in Fig. 21;
Fig. 24 is a front view of a fourth embodiment of the head-protecting airbag device of the present invention, as viewed from the vehicle's interior;
Fig. 25 is a sectional view taken along line XXV-XXV in Fig. 24;
Fig. 26 is a perspective view of end portions of contiguous split parts of an airbag cover in the airbag device in Fig. 24;
Fig. 27 is a sectional view taken along line XXVII-XXVII in Fig. 24;
Fig. 28 is a sectional view of an inflator used in the airbag device in Fig. 24 before being fixed to the vehicle body;
Fig. 29 is a front view of a fifth embodiment of the head-protecting airbag device of the present invention, as viewed from the vehicle's interior;
Fig. 30 is a front view showing a modification of the fixing manner of an airbag cover of the first embodiment to the vehicle body;
Figs. 31A and 31B are sectional views showing the attaching manner of the airbag body to the vehicle body shown in Fig. 30;
Fig. 32 is a front view of a sixth embodiment of the head-protecting airbag device of the present invention mounted on the vehicle, as viewed from the vehicle's interior;
Fig. 33 is a schematic enlarged vertical section taken along line XXXIII-XXXIII in Fig. 32;
Fig. 34 is a horizontal section taken along line XXXIV-XXXIV in Fig. 33; and
Fig. 35 is a schematic exploded perspective view of the vicinity of a joint portion in an airbag cover of the head-protecting airbag device in Fig. 32.

### DESCRIPTION OF PREFERRED EMBODIMENTS

Preferred embodiments of the present invention are described below with reference to the accompanying drawings. However, the invention is not limited to the embodiments disclosed herein. All modifications within the appended claims and equivalents relative thereto are intended to be encompassed in the scope of the claims.

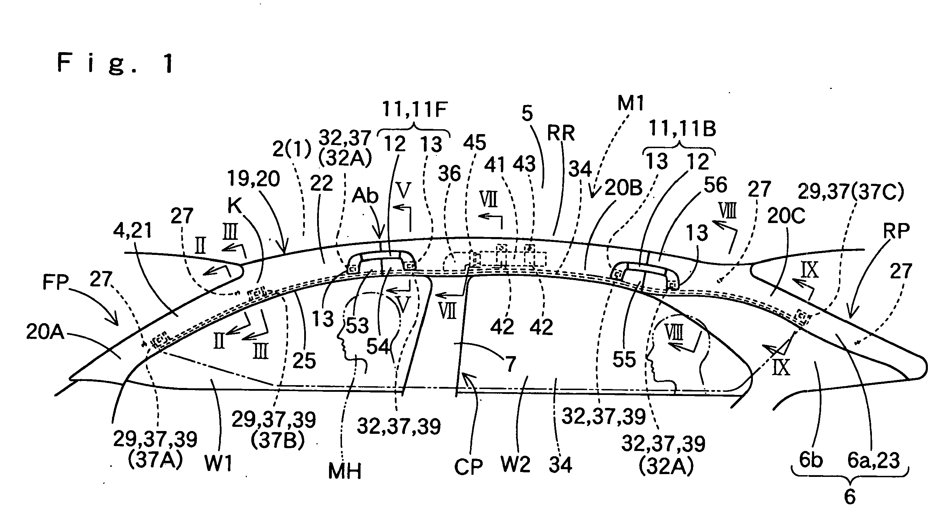

Referring to Fig. 1, a first embodiment of the head-protecting airbag device M1 according to the present invention locates a folded airbag 34 along the upper peripheries of side windows W1 and W2 inside the vehicle, from a front pillar FP to an upper part of a rear pillar RP, via a roof side rail RR above a center pillar CP or a middle pillar.

Relationships of up-down, front-rear, and left-right in this specification are based on a state of the head-protecting airbag device mounted on a vehicle, and therefore, correspond to up-down, front-rear, and left-right of the airbag device mounted on a vehicle.

The head-protecting airbag device M1 includes an airbag 34, an inflator 41, mounting brackets 39, an airbag cover 19 and an assist grip 11.

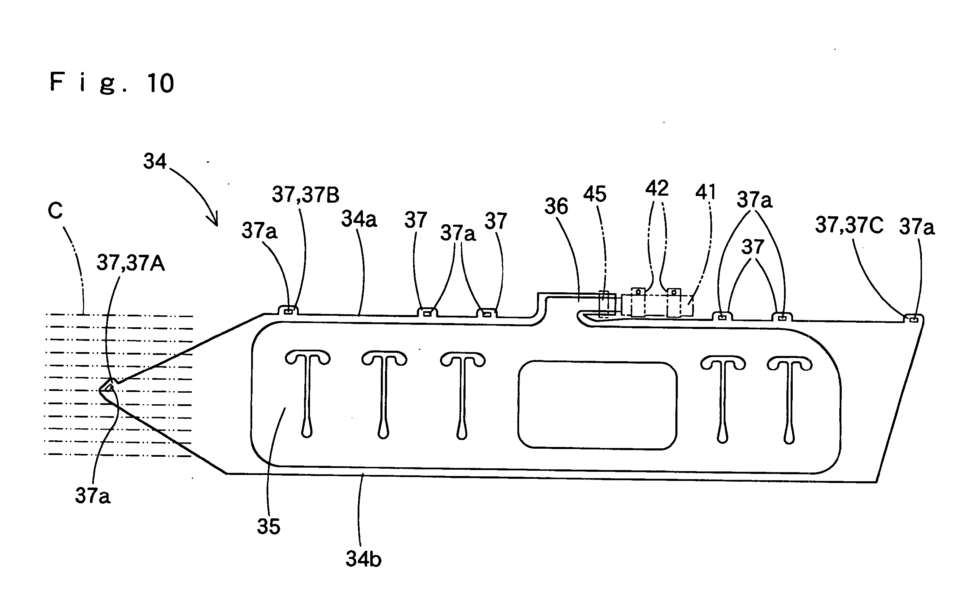

The airbag 34 is formed by hollow-weaving method of polyamide, polyester yarns or the like, and includes a gas admissive portion 35 which has a substantially rectangular sheet shape and inflates with inflation gas from the inflator 41, as shown in Figs. 1 and 10. The airbag 34 is provided along its upper edge 34a with a plurality of mounting portions 37 for attachment of the airbag 34 to the vehicle body 1. The airbag 34 is further provided in the middle of the front-rear direction of the gas admissive portion 35 with a tubular joint port 36 extending upward and bent to be joined with the inflator 41.

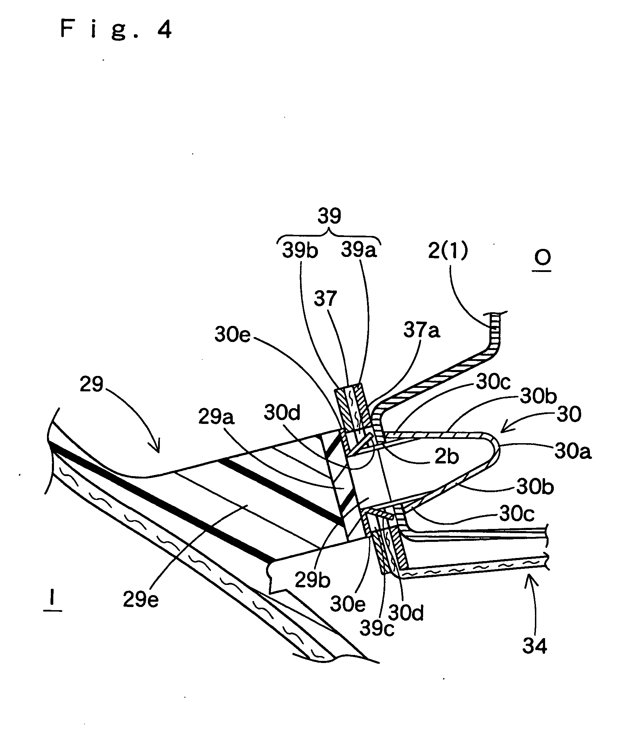

Each of the mounting portions 37 is provided with a rectangular mounting hole 37a, and a mounting bracket 39, as shown in Figs. 4, 6, 11, 13 and 14 is attached thereto. Each of the mounting brackets 39 consists of two substantially rectangular plates of sheet metal, i.e., an outer and inner plates 39a and 39b which are located at the inner side I and the outer side O of the mounting portion 37, respectively. Each of the plates 39a and 39b has a through hole 39c shaped correspondingly to the mounting hole 37a. The plates 39a and 39b are attached to each of the mounting portions 37 by being plastically deformed to protrude partially either toward interior or exterior with the mounting portion 37 put therebetween. Each of the mounting portions 37 is then secured to the inner panel 2 utilizing later-described retaining piece 15 or 30 which is put though the mounting hole 37a and the through hole 39c to be held by a mounting hole 2b or 2c formed in the inner panel 2 of the vehicle body 1.

The retaining pieces 15 and 30 also serve to attach the airbag cover 19 to the inner panel 2, and the retaining piece 15 further serves to secure the assist grip 11 to the inner panel 2.

As shown in Figs. 1, 7, 10 and 11, the inflator 41 is joined with the joint port 36 of the airbag 34 by a cramp 45, and is secured to the inner panel 2 as a member of the vehicle body 1 by mounting brackets 42. Each of the mounting brackets 42 is adapted to cramp the inflator 41, and is secured to the inner panel 2 by screwing a bolt 43 into a nut 2e formed in the mounting hole 2d of the inner panel 2.

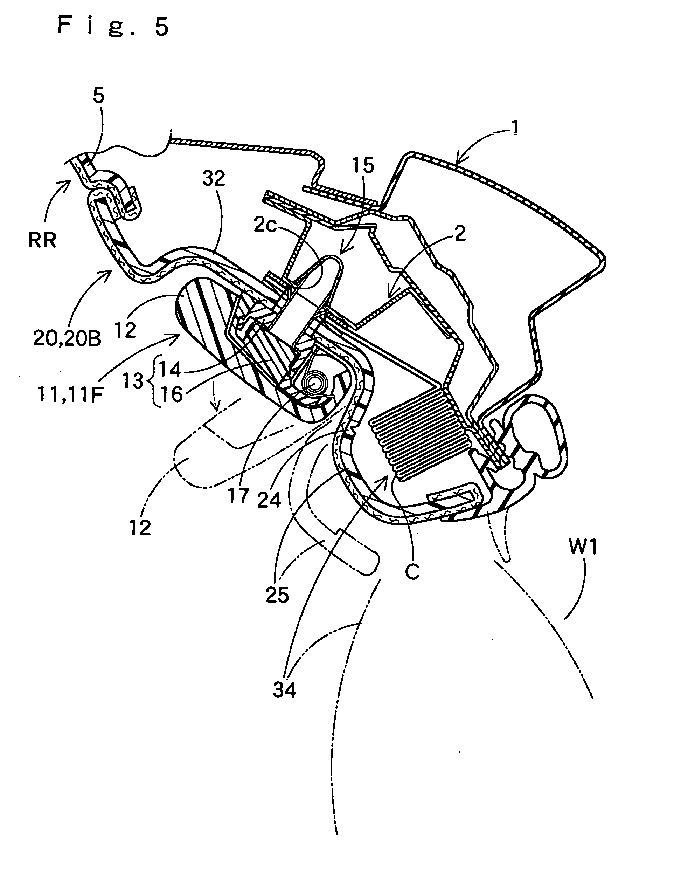

Referring to Figs. 1, 6, 11 and 14, the assist grips 11 (11F and 11B) are located in the interior I of the roof side rail RR in the upper periphery of the side windows W1 and W2, i.e., in the region where the airbag cover 19 is positioned. Each of the assist grips 11 includes an inversed-U shaped grip portion 12 for a vehicle occupant to hand-grip, and fixing portions 13 located in front and rear ends of the grip portion 12. Each of the fixing portions 13 includes a base 14 , a retaining piece 15 and a cap 16. The base 14 is rotatably joined with the end of the grip portion with a hinge mechanism 17 interposed therebetween. The hinge mechanism 17 is constructed such that its part located in one of the two fixing portions 13 of the assist grip 11 includes a damper mechanism, and another part located in the other fixing portion 13 includes a spring member for helping the grip portion 12 to return after turning. The grip portion 12, when in service, is pulled out toward the interior I by turning it around the position of the hinge mechanism 17, as indicated by double-dotted lines in Fig. 5.

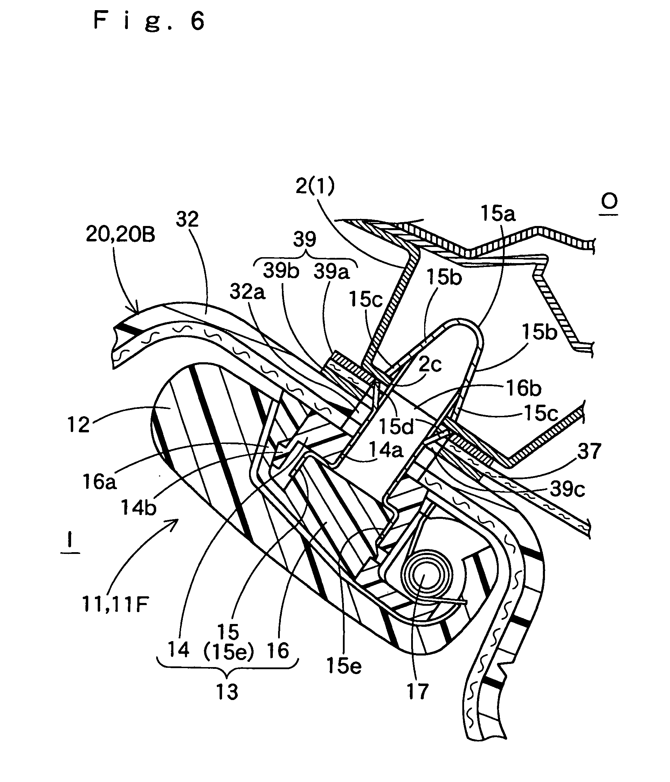

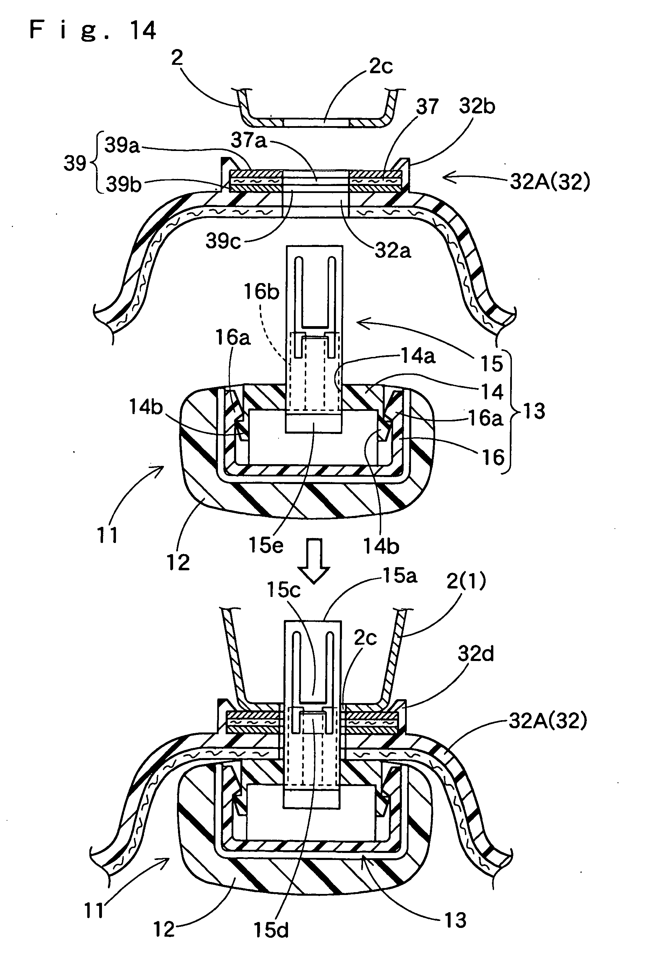

Referring to Figs. 6 and 14, the base 14 is made from synthetic resin, and includes a hole 14a which opens in a rectangular shape through in the interior-exterior direction. The hinge mechanism 17 is located at the lower end of the base 14. The retaining piece 15 is put through the through hole 14a. In the interior I of the base 14 are a plurality of retaining pawls 14b for retaining the cap 16.

The cap 16 made from synthetic resin is exposed in the vehicle's interior I when the grip portion 12 is turned and pulled out. The cap 16 includes an engaging portion 16a to be engaged with the retaining pawl 14b of the base 14, and two spacers 16b to be inserted in between side walls 15b of the retaining piece 15 upon engagement with the base 14. The spacers 16b are adapted to prevent the side walls 15b of the retaining piece 15 from approaching each other, and to stabilize the fixation of the retaining piece 15 to the inner panel 2.

The retaining piece 15 formed by bending a spring sheetmetal has a substantially U-shaped section with its leading end 15a rounded, and is bifurcated from the leading end 15a into the side walls 15b. Each of the side walls 15b includes a retaining projection 15c which is formed by cutwork and raised to project outwardly, and a holding projection 15d which is also formed by cutwork to confront the interior end of the retaining projection 15c. When the retaining piece 15 is inserted into the mounting hole 2c of the inner panel 2 of the vehicle body 1, the retaining projection 15c is once deformed to pass through the mounting hole 2c, and then springs back such that the periphery of the mounting hole 2c is positioned between the retaining projection 15c and the holding projection 15d. Consequently, the retaining piece 15 is secured to the inner panel 2 tightly by being suppressed to move toward the interior I or exterior O. Ends 15e of the retaining piece 15 toward the interior I are adapted to serve as a grip portion for gripping when pulling the retaining piece 15 out of the mounting hole 2c such that the side walls 15b approach each other to shift the retaining projections 15c into the mounting hole 2c from the periphery of the mounting hole 2c.

When the side walls 15b are made to approach each other to remove the retaining piece 15 from the inner panel 2, the spacers 16b of the cap 16 positioned between the side walls 15b are pulled out of the space between the side walls 15b by removing the cap 16. By then removing the retaining piece 15, the assist grip 11 can be detached, so that the airbag cover 19 (or later-described split parts 20) and the airbag 34 can be detached from the inner panel 2.

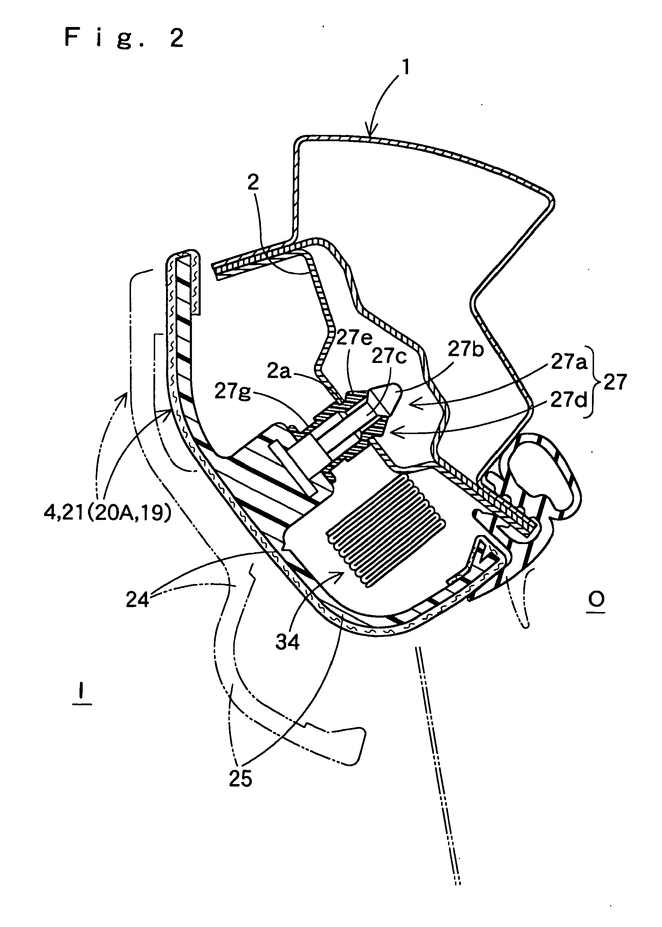

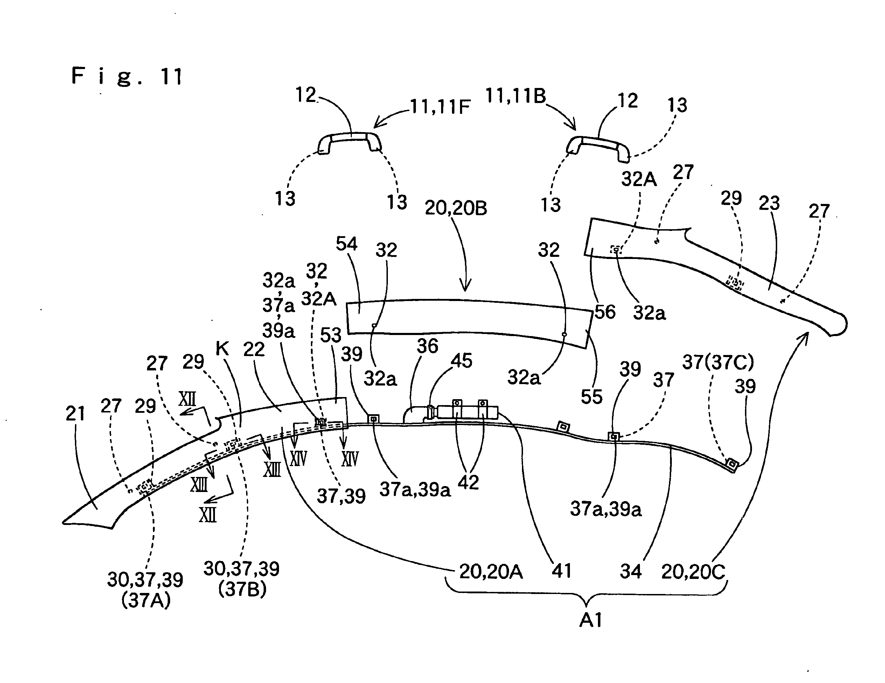

Referring to Figs. 1 and 11, the airbag cover 19 is located between a roof head lining 5 and the side windows W1 and W2, and serves as a roof side rail garnish which is separate from (i.e., not part of) the roof head lining 5. In the illustrated embodiment, the airbag cover 19 is located extendedly from the front pillar FP in the upper periphery of the side windows W1 and W2, to the upper part and rear periphery of the rear pillar RP, via the roof side rail RR above the center pillar CP or a middle pillar, inside the vehicle. As shown in Figs. 2, 3, 5, and 7 to 9, the airbag cover 19 is made from synthetic resin such as PC (polycarbonate)/ABS (Acrylonitrile butadiene styrene), polypropylene with filler, or thermo-plastic elastomer of polyolefin, with a skin, and is provided entirely along its lower edge with a door portion 25 that is pushed open by the airbag 34 upon deployment of the airbag 34. Along the upper edge of the door portion 25 is a thinned hinge line 24 for helping easy opening of the door portion 25. Although the illustrated embodiment show the cover 19 with a skin on surface, the cover may be constructed without a skin.

As best shown in Figs. 1 and 11, the airbag cover 19 of the first embodiment consists of three split parts 20 (20A, 20B and 20C) that are split up in the front-rear direction. The split parts 20A and 20B are split up at a position between the fixing portions 13 of the front assist grip 11F, while the split parts 20B and 20C are split up at a position between the fixing portions 13 of the rear assist grip 11B.

The split part 20A includes a front pillar garnish portion 21 for covering the entire area of the interior side I of the front pillar FP, and a roof side rail portion 22 that surpasses an intersection K of the front pillar FP and the roof side rail RR and extends up to the assist grip 11F located in the rear part of the side window W1 for the front seat. The split part 20B is located along the roof side rail RR between the assist grips 11F and 11B in the upper periphery of the side windows W1 and W2, surpassing the center pillar CP. The split part 20C includes a rear pillar garnish portion 23 that extends from the assist grip 11B to surpass the rear pillar RP, and is located up to the rear periphery of the rear pillar RP.

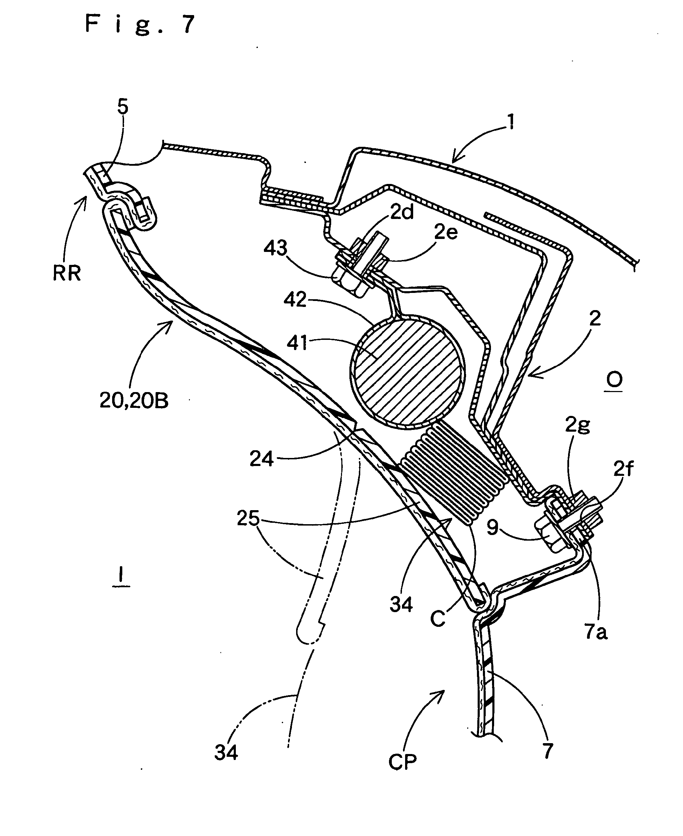

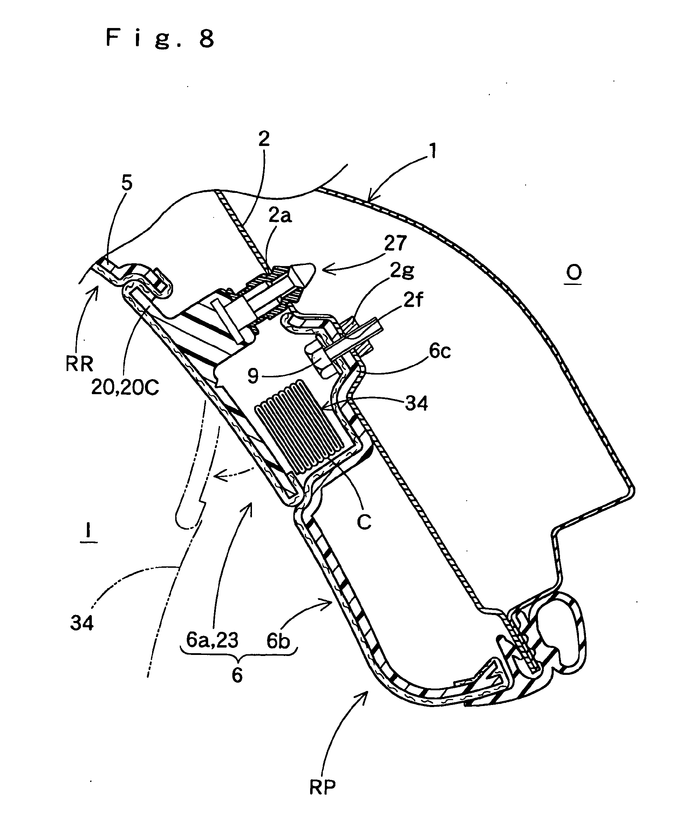

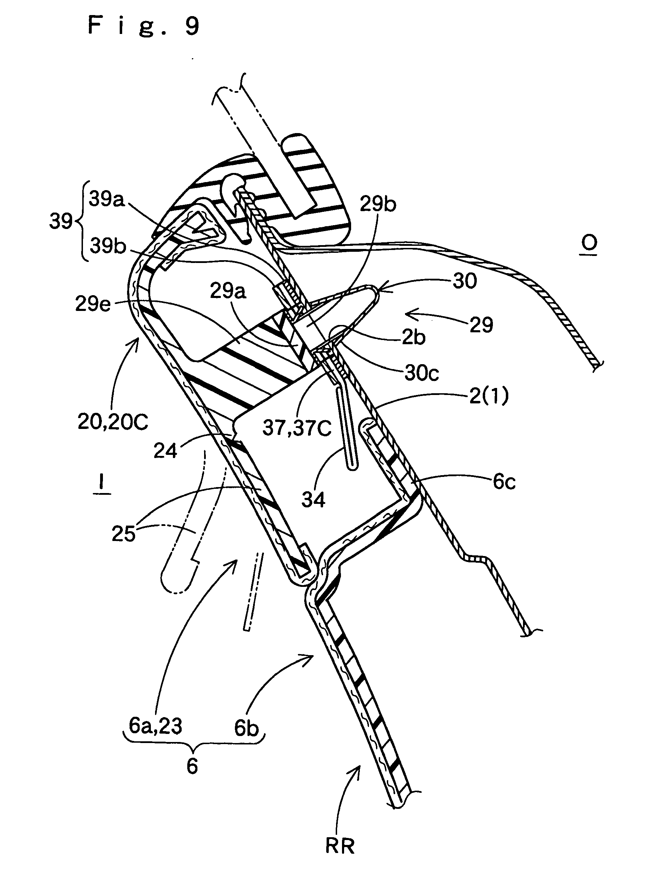

In the first embodiment, as shown in Figs. 1, 8 and 9, a rear pillar garnish 6 for covering the interior side I of the rear pillar RP includes an upper part 6a located in the upper and rear edge parts, i.e., the rear pillar garnish portion 23 of the split part 20C, and a lower part 6b fixed to the inner panel 2 in the rear pillar RP by mounting bolts 9 or the like. As shown in Figs. 8 and 9, an upper edge part 6c of the lower part 6b extends from the interior I toward the exterior O, and then is secured to the inner panel 2 by a plurality of mounting bolts 9. The bolts 9 are fastened into nuts 2g provided in mounting holes 2f in the inner panel 2. In the meantime, in a center pillar garnish 7 for covering the interior side I of the center pillar CP, too, as shown in Fig. 7, its upper edge 7c extends from the interior I toward the exterior O, and is secured to the inner panel 2 by the mounting bolts 9. These upper edges 6c and 7c enable the airbag 34 to securely deploy in the interior side I of the garnish lower part 6b and the garnish 7 upon deployment, not between the garnish lower part 6b or the garnish 7 and the inner panel 2.

As shown in Figs. 1 to 4, 8, 9 and 11 to 13, the split parts 20A and 20C of the airbag cover 19 are provided at predetermined positions in the exterior side O with mounting portions 27 and 29 for attaching the split parts 20A and 20C to the inner panel 2. In the first embodiment, the mounting portions 29 constitute first mounting portions that also fasten the mounting portions 37 of the airbag 34, while the mounting portions 27 constitute second mounting portions that attach the split parts 20A and 20C to the vehicle body 1, without involving the airbag 34.

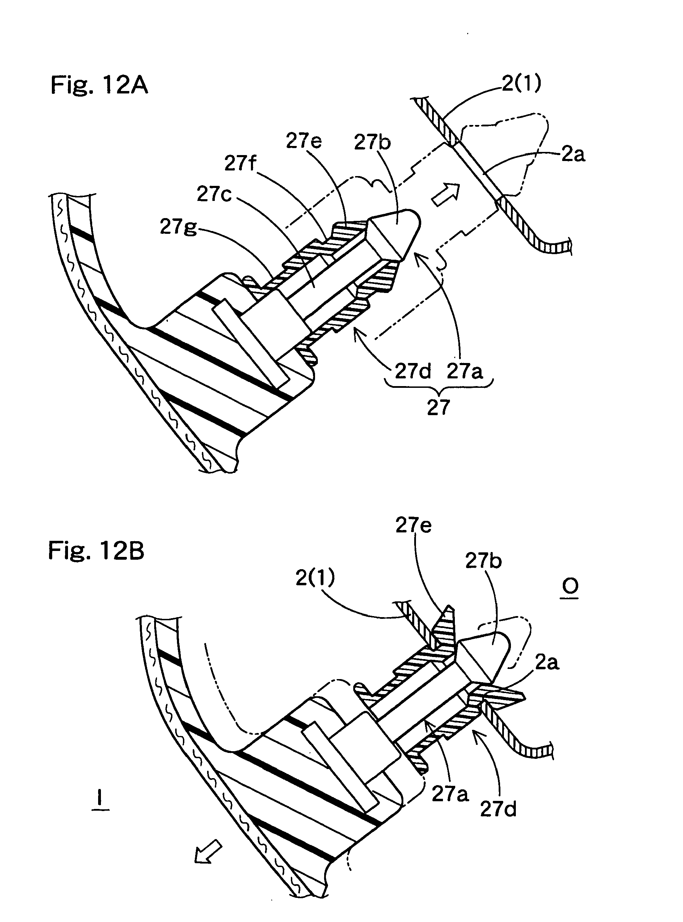

As shown in Figs. 2 and 12, each of the mounting portions 27 includes a metal axis 27a embedded in the exterior side O of the airbag cover, and a cap 27d made from rubber or soft synthetic resin to cover the axis 27a. The axis 27a includes a neck portion 27c and a head 27b bulged in radius direction at the leading end of the neck portion 27c. The cap 27d has a substantially cylindrical shape capable of covering over the axis 27a, and is provided with a thick retaining portion 27e located at the leading end and retained by the head 27b, a retaining recess 27f located in the outer circumference near a root part of the retaining portion 27e, and a U-groove 27g located in the outer circumference near a root part of the cap 27d. The mounting portion 27 is secured to the inner panel 2 by being inserted into the mounting hole 2a of the inner panel 2 up to the position of the retaining recess 27f, with the axis 27a sheathed with the cap 27d, such that the cap retaining portion 27e held at the axis head 27b is retained by the exterior periphery of the mounting hole 2a. In this mounted state, even if the airbag cover 19 is pulled toward the interior I forcefully, only the airbag cover 19 shifts toward the interior I according to the plastic deformation of the cap retaining portion 27e, as shown in Fig. 12B, but the axis head 27b and the cap retaining portion 27e are not pulled out of the mounting hole 2a, so that the mounting portion 27 is securely attached to the inner panel 2.

In occasions of removing the mounting portion 27 from the inner panel 2 for maintenance and so on, the mounting portion 27 is firstly pushed in toward the exterior O until the U-groove 27g of the cap 27d is positioned in the inner circumference of the mounting hole 2a. Since the inner diameter of the cap 27d is predetermined such that the head 27b of the axis 27a may be pulled out of the cap 27d, the axis 27a can be then pulled out of the cap 27d and the mounting hole 2a while leaving the cap 27d retained in the periphery of the mounting hole 2a. Thus the split parts 20A and 20C can be detached from the inner panel 2.

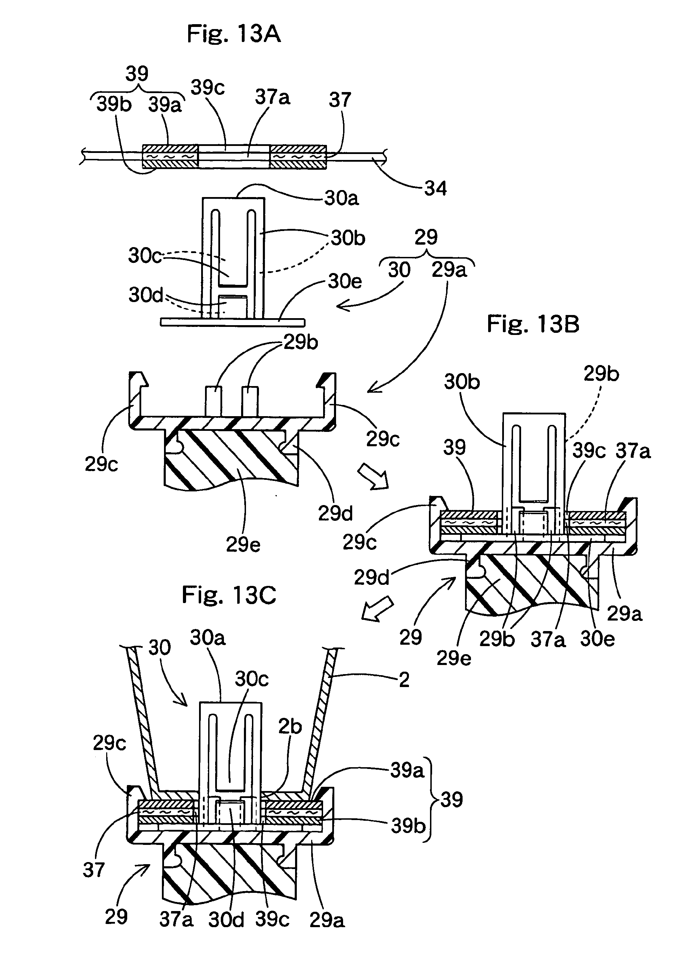

Referring to Figs. 4 and 13, each of the mounting portions 29 is adapted to attach the mounting portion 37 of the airbag 34 having the mounting bracket 39 applied thereto to the inner panel 2 together with the split parts 20A and 20C. The mounting portion 29 includes a seating 29a provided with a plurality of legs 20c for retaining the mounting bracket 39 applied to the mounting portion 37. Spacers 29b are projected from this seating 29a to be inserted in between side walls 30b of the retaining piece 30. The seating 29a is engaged with a base 29e of the main body of the split parts 20A and 20C in a separable manner utilizing retaining legs 29d.

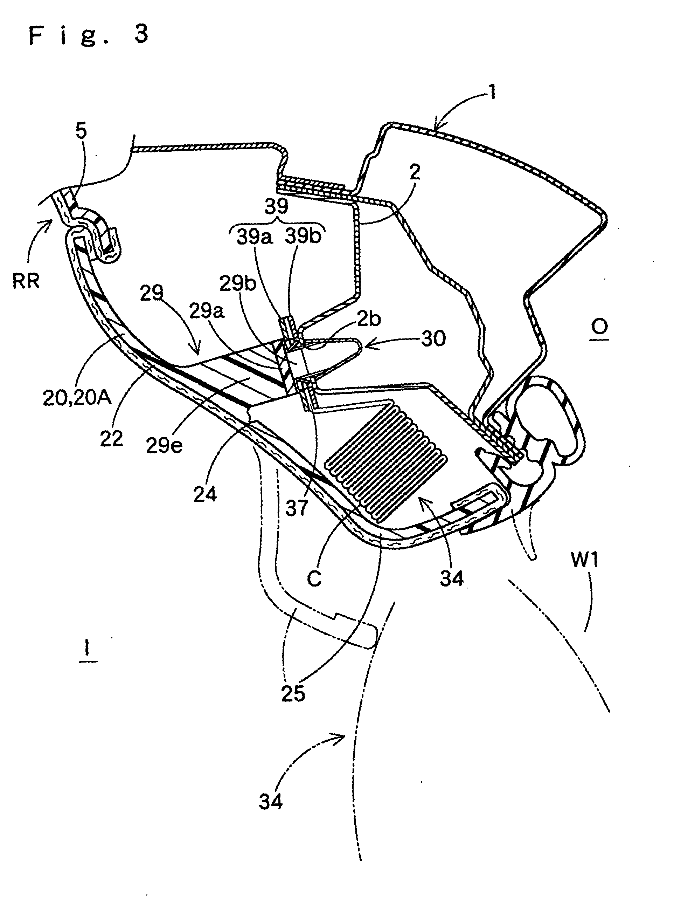

Each of the retaining pieces 30 is attached to the seating 29a together with the mounting bracket 39 when the bracket 39 is applied to the seating 29a. Each of the retaining pieces 30 is made substantially similarly to the retaining piece 15 located in the fixing portion 13 of the assist grip 11. That is, the retaining piece 30 is formed by bending a spring sheetmetal to have a substantially U-shaped section with its leading end 30a rounded, and is bifurcated from the leading end 30a into the side walls 30b. Each of the side walls 30b includes a retaining projection 30c which is formed by cutwork and raised to project outwardly, and a holding projection 30d which is also formed by cutwork to confront the interior end of the retaining projection 30c. The retaining piece 30 is further provided at the interior ends of the side walls 30b with a flange-like grip portion 30e projected outwardly. As shown in Figs. 13A and 13B, the retaining piece 30 is assembled with the seating 29a of the split part 20A or 20C by firstly inserting the side walls 30b into the through hole 39c of the mounting bracket 39 and the mounting hole 37a of the mounting portion 37 from part of the leading end 30a, and by then applying the seating 29a of the mounting portion 29 to the grip portions 30e such that the legs 29c are hooked by the mounting bracket 39. Then as shown in Figs. 3, 4, 9 and 13C, when the retaining piece 30 is inserted into the mounting hole 2b of the inner panel 2 of the vehicle body 1, the retaining projection 30c is once deformed to pass through the mounting hole 2b, and then springs back such that the periphery of the mounting hole 2b is positioned between the retaining projection 30c and the holding projection 30d. Consequently, the retaining piece 30 is secured to the inner panel 2 tightly by being suppressed to move toward the interior I or exterior O, and secures the mounting portion 29 of the split part 20A or 20C to the inner panel 2 together with the mounting portion 37 of the airbag 34.

In occasions of maintenance and so on after fixing of the mounting portions 29 of the split parts 20A or 20C and the mounting portions 37 of the airbag 34 to the inner panel 2, the split parts 20A and 20C can be removed from the inner panel 2 while leaving the seatings 29a, the retaining pieces 30 and the mounting brackets 39 and so on attached to the inner panel 2, if the split parts 20A and 20C are pulled forcefully toward the interior I to remove the retaining legs 29d from the base 29e. If then the retaining legs 29c are detached from the mounting brackets 39, the spacers 29b can be taken out from the space between the side walls 30b, and the grip portions 30e of the retaining pieces 30 become grippable to make the side walls 30b approach each other. Then the retaining projections 30c are shifted into the mounting hole 2b from the periphery of the mounting hole 2b, so that the mounting portion 37 is taken off from the inner panel 2 by pulling the retaining piece 30 out of the mounting hole 2b.

As shown in Figs. 1, 6, 11 and 14, each of the split parts 20A, 20B and 20C is provided at each position where the fixing portion 13 of the assist grip 11 is located with a seating 32 (including 32A) having a through hole 32a through which the side walls 15b of the retaining piece 15 of the fixing portion 13 are able to pass. Each of the seatings 32 is secured to the inner panel 2 with the periphery of the through hole 32a pressed onto the base 14 of the fixing portion 13. As shown in Fig. 14, the seatings 32A located in the rear end 53 of the split part 20A and in the front end 56 of the split part 20C include respectively a plurality of retaining legs 32b for retaining the mounting bracket 39, in addition to the through hole 32a. On the other hand, each of the seatings 32 located in the front end 54 and the rear end 55 of the split part 20B only includes a through hole 32a, but not retaining legs 32b.

To mount the head-protecting airbag device M1 on the vehicle, the airbag 34, the mounting brackets 39 and 42, the inflator 41, and the split parts 20A and 20C are assembled into an airbag module A1, firstly, as shown in Fig. 11. Fig. 11 shows a condition in which the split part 20C is separated from the airbag 34. When the airbag module A1 is formed, the airbag 34 is folded up firstly. As shown in Fig. 10, the airbag 34 is bellows-folded, from flat expanded, and deflated state, on crest and valley folds C (as referred to Figs. 5, 7, 8 and 10), so that its lower edge 34b is brought closer to the upper edge 34a. After folding up, an unillustrated breakable tape member is wound around the folded airbag 34 at predetermined intervals for keeping the folded-up configuration. In the meantime, the mounting brackets 39 are attached to the individual mounting portions 37, and the inflator 41 with the bracket 39 attached thereto is joined with the joint port 36 by the cramp 45.

Subsequently, the retaining pieces 30 are inserted through the mounting holes 37a of the mounting portions 37 (37A, 37B and 37C) located in the front portion and rear end portion of the airbag 34 and through the through holes 39a of the corresponding mounting brackets 39 from the leading end 30a, so that the grip portions 30e abut against the inner plates 39b. Then the seatings 29a preliminarily attached to the base 29e of the mounting portions 29 of the split parts 20A and 20C are located at positions of the mounting portions 37A, 37B and 37C, and their spacers 29b are inserted in between the side walls 30b of the corresponding retaining pieces 30, while the individual retaining legs 29c are hooked by the outer plates 39a of the mounting brackets 39. In the meantime, the individual seatings 32A are attached to the corresponding mounting brackets 39 by the retaining legs 32b. Thus the airbag 34, the mounting brackets 39 and 42, the inflator 41 and the split parts 20A and 20C are assembled into the airbag module A1. In the mounting portions 27, the caps 27d are attached to the axes 27a.

Then, the split part 20B and the assist grips 11 (11F and 11B) are mounted on the vehicle together with the airbag module A1. At this time, the airbag module A1 is mounted on the vehicle firstly. More specifically, each of the mounting portions 27 of each of the split parts 20A and 20C, in which the axis 27a is sheathed with the cap 27d, is inserted into the mounting hole 2a in the inner panel 2 up to the position of the retaining recess 27f such that the cap retaining portion 27e held at the axis head 27b is retained by the exterior periphery of the mounting hole 2a. Thus each of the mounting portions 27 is attached to the inner panel 2. As to each of the mounting portions 29, when each of the retaining pieces 30 is inserted into the mounting hole 2b, the retaining projection 30c is once deformed to pass through the mounting hole 2b, and then springs back such that the periphery of the mounting hole 2b is positioned between the retaining projection 30c and the holding projection 30d. Consequently, the retaining piece 30 is secured to the inner panel 2 tightly by being suppressed to move toward the interior I or exterior O. In the meantime, the mounting brackets 42 holding the inflator 41 are bolt 43 fixed to the inner panel 2.

Subsequently, the split part 20B is located at a predetermined position of the inner panel 2, and the retaining pieces 15 of the fixing portions 13 in the assist grips 11F and 11B are inserted through the through holes 32a of the seatings 32 and 32A in each of the split parts 20A, 20B and 20C, the through holes 39c of the mounting brackets 39, and the mounting holes 37a of the mounting portions 37, and then into the mounting holes 2c of the inner panel 2, and held thereat. Thus the fixing portions 13 hold the seatings 32 and 32A and the mounting brackets 39, and secure the peripheries of the seatings 32 of the split parts 20A, 20B and 20C and the airbag 34 to the inner panel 2. Thus the head-protecting airbag device M1 is mounted on the vehicle.

In mounting the airbag device M1 on the vehicle, an unillustrated wire extending from a control device for inputting actuating signals is connected to the inflator 41. Before assembling the airbag device M1, the center pillar garnish 7 and the lower part 6b of the rear pillar garnish 6 are attached to the vehicle body 1 by bolts and so on, and the roof head lining 5 is also attached to the vehicle.

When the inflator 41 is actuated after the airbag device M1 is mounted on the vehicle, inflation gas is discharged from the inflator 41, and flows into the gas admissive portion 35 of the airbag 34 via the joint port 36. The airbag 34 then inflates and breaks the tape member, pushes and opens the door portion 25 of the airbag cover 19, and deploys to cover the side windows W1 and W2.

In the first embodiment of the present invention, i.e., in the head-protecting airbag device M1, the front pillar garnish portion 21 of the split part 20A as constituent part of the airbag cover 19 serves as a front pillar garnish for covering the interior side of the front pillar FP, and the parting line Ab between the split part 20A and the split part 20B located its rearward is located rearward of the intersection K of the front pillar FP and the roof side rail RR. In other words, the border of the split parts 20A and 20B of the airbag cover 19 is located rearward of the conventional parting position located near the intersection of the front pillar and the roof side rail, so that the parting line Ab does not easily come in sight of an occupant seated in the front seat. Especially when the occupant drives straight forward and looks forward, the parting line Ab beyond the intersection K of the front pillar FP and the roof side rail RR does not easily come in his sight.

Therefore, the head-protecting airbag device M1 is able to provide an improved appearance in the side of the front seat since the parting line Ab of the split parts 20A and 20B of the airbag cover 19 disposed from the front pillar FP on to the roof side rail RR is located rearward.

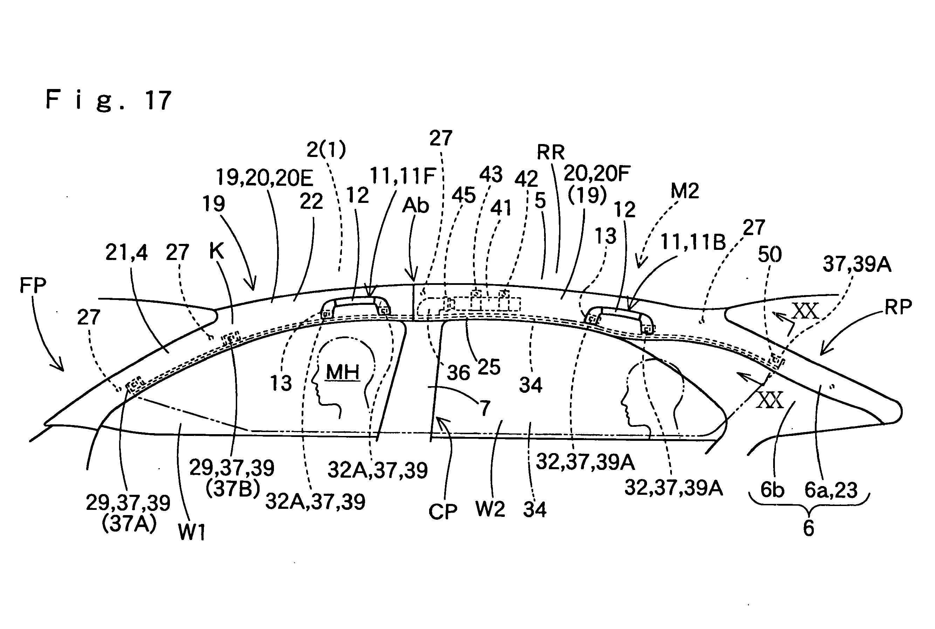

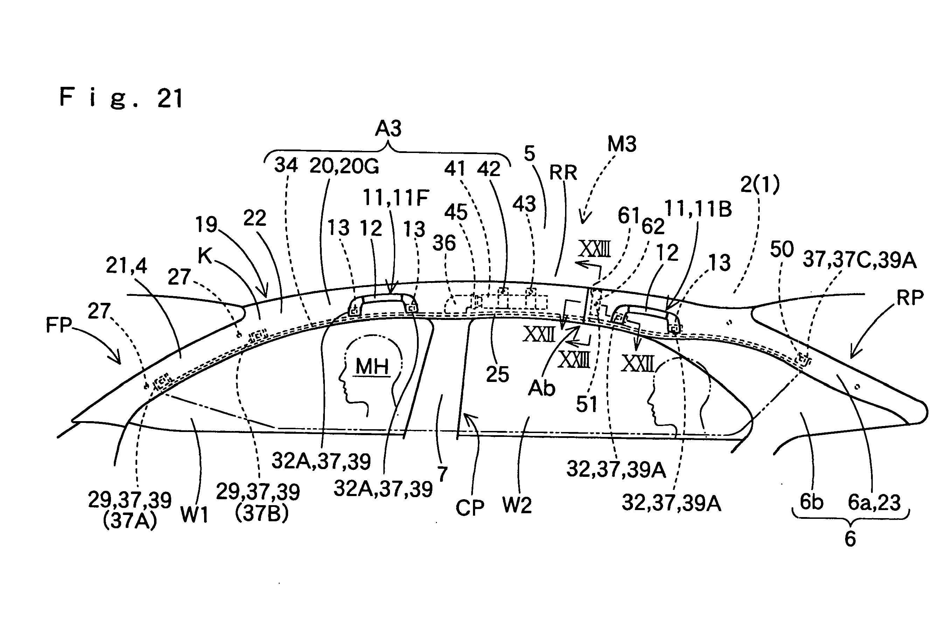

In the first embodiment, especially, the parting line Ab between the frontmost split part 20A and the following split part 20B is located near the head MH of an occupant seated in the front seat, which further makes it difficult for the parting line Ab to come in sight of the occupant especially when driving forward and looking forward, and consequently improves the appearance in the side of the front seat. Of course, with arrangements of later-described second embodiment as shown in Fig. 17 or third embodiment shown in Fig. 21 where the parting line Ab is located rearward of the head MH of an occupant seated in the front seat, the parting line Ab will further hardly come in sight of the occupant, and the appearance in the side of the front seat will be improved.

Moreover, the head-protecting airbag device M1 is composed of the parts 20A, 20B and 20C split in the front-rear direction. Therefore, although the airbag cover 19 for covering the folded airbag 34 is elongate and located lengthily from the front pillar FP and all along the roof side rail RR in the upper periphery of the side windows W1 and W2 between the roof head lining 5 and the side windows W1 and W2 and inside I of the vehicle, the airbag cover 19 is easy to manufacture, store, transport, and handle.

In the first embodiment, the rearmost split part 20C in the airbag cover 19 includes a portion 6a for covering the interior I of at least upper part of the rear pillar RP. Accordingly, the airbag cover 19 is disposed from the front pillar FP through the upper part of the rear pillar RP, and thus an entire area between the roof head lining 5 and the side windows W1 and W2 including the front pillar FP brings in a sense of unity. Therefore, the appearance inside I of the vehicle is improved. In the rear pillar RP, moreover, since the upper part 6a of the rear pillar garnish 6 for covering the interior I is constructed as the airbag cover 19, too, it is possible, upon deployment of the airbag 34, to locate the airbag 34 in the interior I of the lower part 6b of the rear pillar garnish 6. Therefore, an occupant positioned in the interior I of the rear pillar RP is easily protected by the inflated airbag 34.

In the first embodiment, furthermore, the assist grips 11F and 11B provided at the front and rear ends with the fixing potions 13 are located within the arrangement area of the airbag cover 19, and the front and rear fixing portions 13 are located across the end portions 53, 54 of the contiguous split parts 20A and 20B and the end portions 55 and 56 of the contiguous split parts 20B and 20C of the airbag cover 19, respectively, so as to secure the end portions 53, 54, 55 and 56 of the contiguous split parts 20A, 20B and 20C to the vehicle body 1 together when the fixing portions 13 are secured to the vehicle body 1. Accordingly, means and processes for fixing the split parts 20A, 20B and 20C to the vehicle body 1 are reduced. Of course, since the fixing portions 13 located at the ends of the assist grips 11F and 11B secure the end portions 53, 54, 55 and 56 of the contiguous split parts 20A, 20B and 20C to the vehicle body 1, portions near the end portions 53, 54, 55 and 56 of the split parts 20A, 20B and 20C do not unnecessarily project toward the interior I when the door portion 25 opens. In addition, since the parting lines Ab of the contiguous split parts are partially hidden by the grip portions 12 of the assist grips 11F and 11B, the appearance is improved.

Especially in the first embodiment, the airbag cover 19 is composed of three parts 20A, 20B and 20C split in the front-rear direction, and all the contiguous portions of the split parts, i.e., the end portions 53 and 54 of the split parts 20A and 20B and the end portions 55 and 56 of the split parts 20B and 20C are fixed by the assist grips 11F and 11B, respectively. Accordingly, means and processes for fixing the split parts 20A, 20B and 20C which constitute the airbag cover 19 entirely to the vehicle body 1 are further reduced. In case of fixing more than two split parts 20 to the vehicle body 1 by the fixing portions 13 located at the front and rear ends of the assist grips 11, it is sufficient that at least one pair of split parts is fixed at their end portions by at least one assist grip 11, and the end portions of other pair(s) of split parts may be secured to the body 1 without utilizing the assist grip. Of course, if end portions of all contiguous split parts, or alternatively more than one pair of end portions of split parts are secured to the vehicle body together with the fixing portions of the assist grip, means and processes for fixing those end portions to the vehicle body are reduced, including the case where the airbag cover is composed of two split parts.

In the first embodiment, moreover, the airbag module A1 is formed preliminarily of the airbag 34, the inflator 41 for supplying inflation gas to the airbag 34, and the split parts 20A and 20C, and thus the mounting of the airbag 34, the inflator 41 and the split parts 20A and 20C on the vehicle is carried out by attaching this airbag module A1 to the vehicle. This arrangement enables reduction of tact time per vehicle in comparison with a case of mounting the individual parts separately on vehicle, and also facilitates transportation and storage since the individual parts can be handled as a unit.

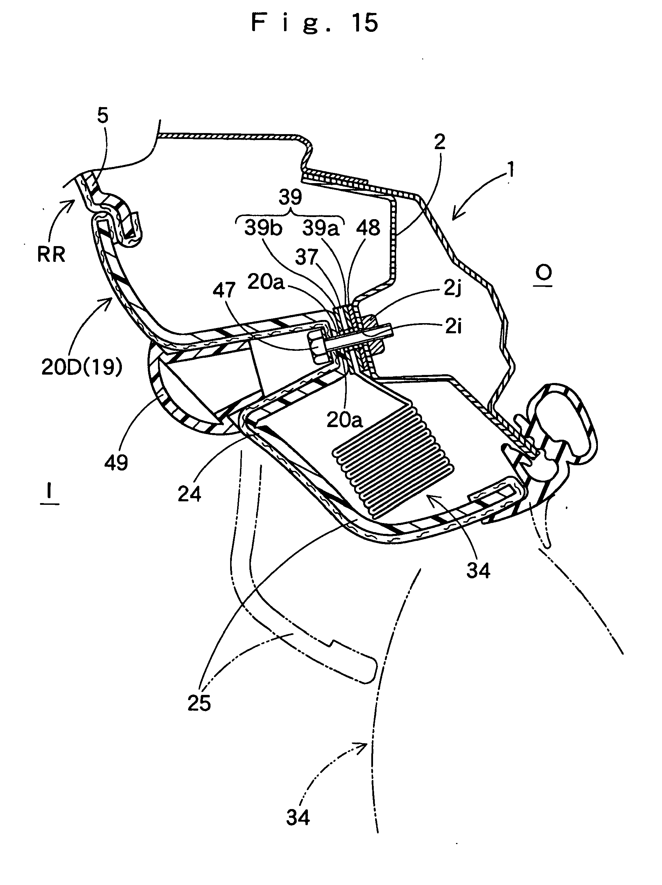

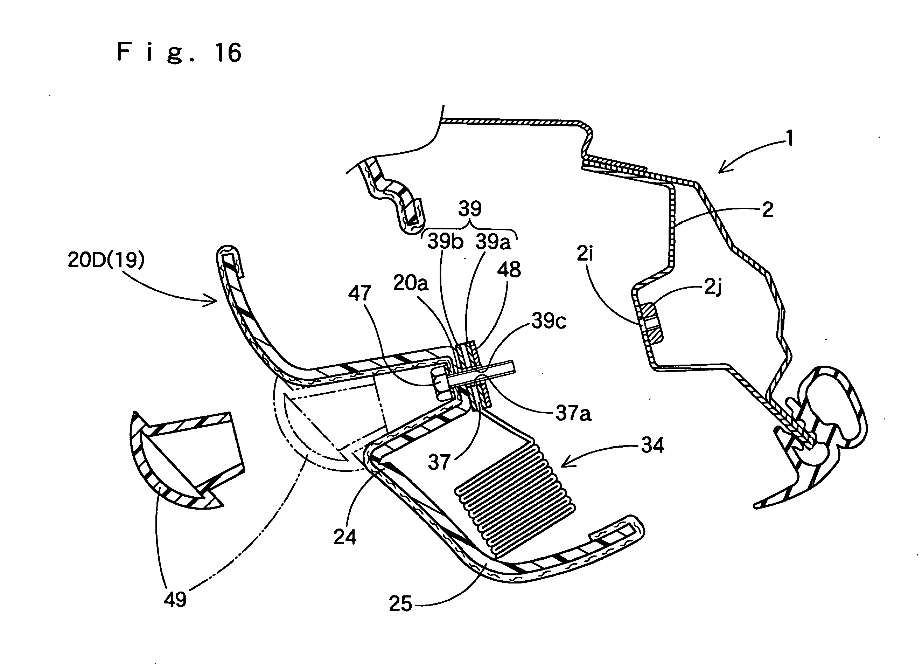

Although the retaining pieces 30 are employed in attaching the mounting portions 37 of the airbag 34 to the inner panel 2 of the vehicle body 1 in the first embodiment, the mounting portions 37 of the airbag 34 may be attached to the inner panel 2 by bolts 47 to be inserted through the mounting holes 37a of the mounting portions 37 and the through holes 39c of the mounting brackets 39, and then fastened into nuts 2j formed in the mounting holes 2i of the inner panel 2, as shown in Figs. 15 and 16. The bolts 47 shown in Figs. 15 and 16 are inserted into mounting holes 20a formed in a predetermined split part 20D of the airbag cover 19, and holes 37a, 39c, and spring washers 48 are fastened thereto, such that the airbag 37 is assembled with the split part 20D. After fastening the bolts 47 into the nuts 2j of the inner panel 2, caps 49 are fit in the periphery of the mounting holes 20a of the split part 20D for hiding the heads of bolts 47. Here, when predetermined mounting portions 37 are bolt-fixed to the inner panel 2, the predetermined mounting portions 37 with the brackets 39 attached thereto may be bolt-fixed to the inner panel 2 before the cover 19 is attached to the vehicle.

However, since the first embodiment employs the metal retaining pieces 30 which can be securely fixed to the inner panel 2 only by being pushed into the mounting holes 2b, the fixing work of the airbag 34 to the body 1 is facilitated.

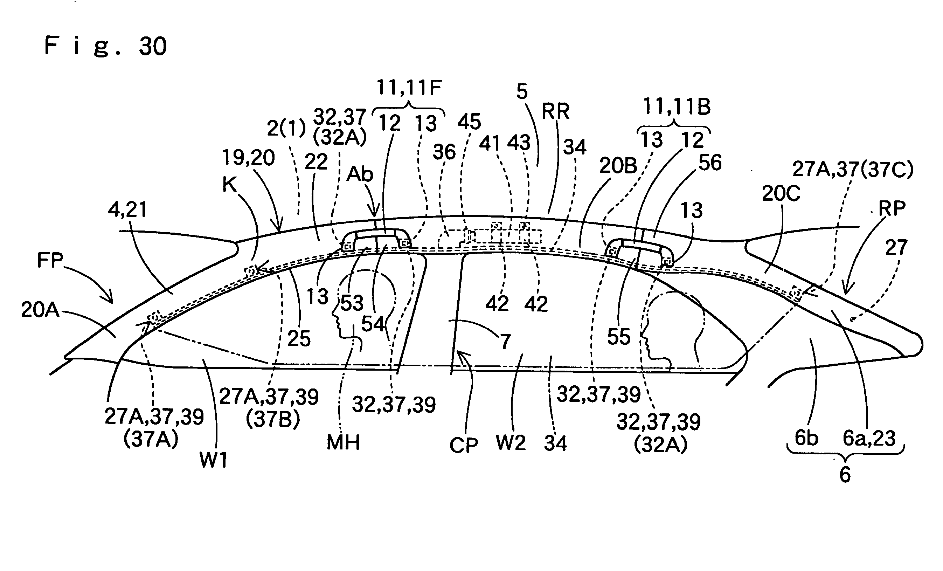

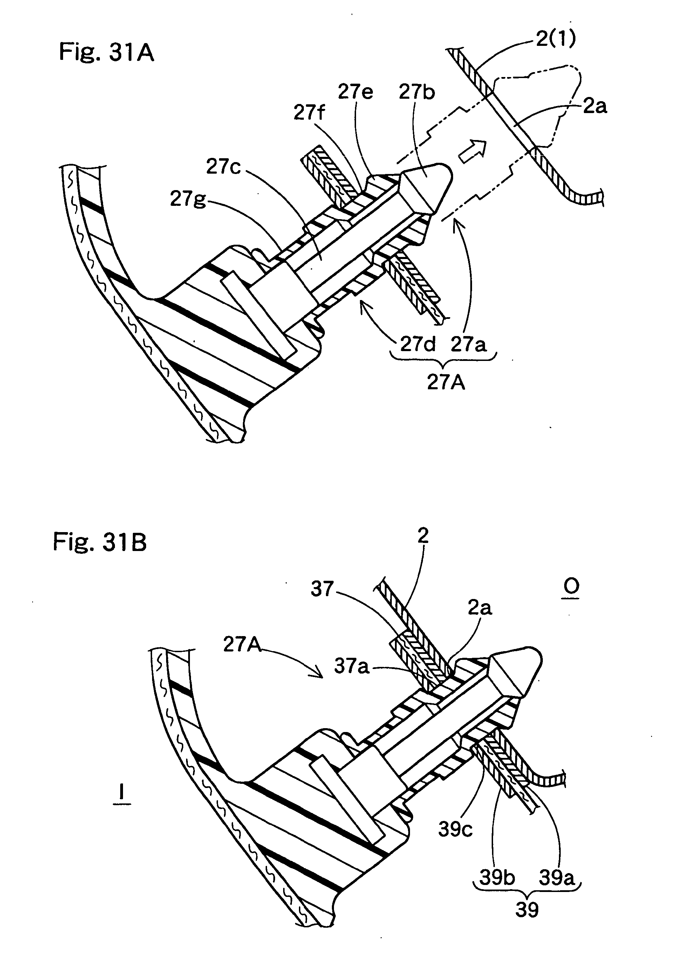

To attach the mounting portions 37 of the airbag 34 to the inner panel 2 of the vehicle body 1, furthermore, it will also be appreciated to employ mounting portions 27A shown in Figs. 30 and 31. Each of the mounting portions 27A is inserted into the mounting hole 37a and the through hole 39c such that the mounting portion 37 and the bracket 39 are retained in the retaining recess 27f of the cap 27d. This way each of the mounting portions 27A is attached to the inner panel 2 of the vehicle body 1 together with the mounting portion 37 having the bracket 39 attached thereto by inserting the mounting portion 27A into the retaining hole 2a. In this case, the mounting portions 27A constitute the first mounting portions that also fasten the airbag 34 to the vehicle body 1.

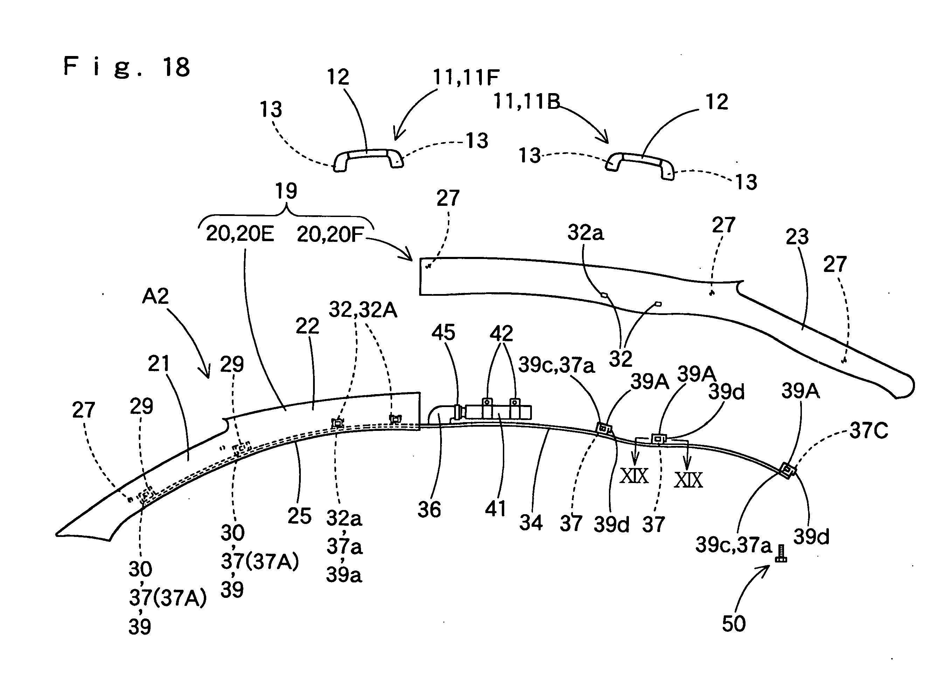

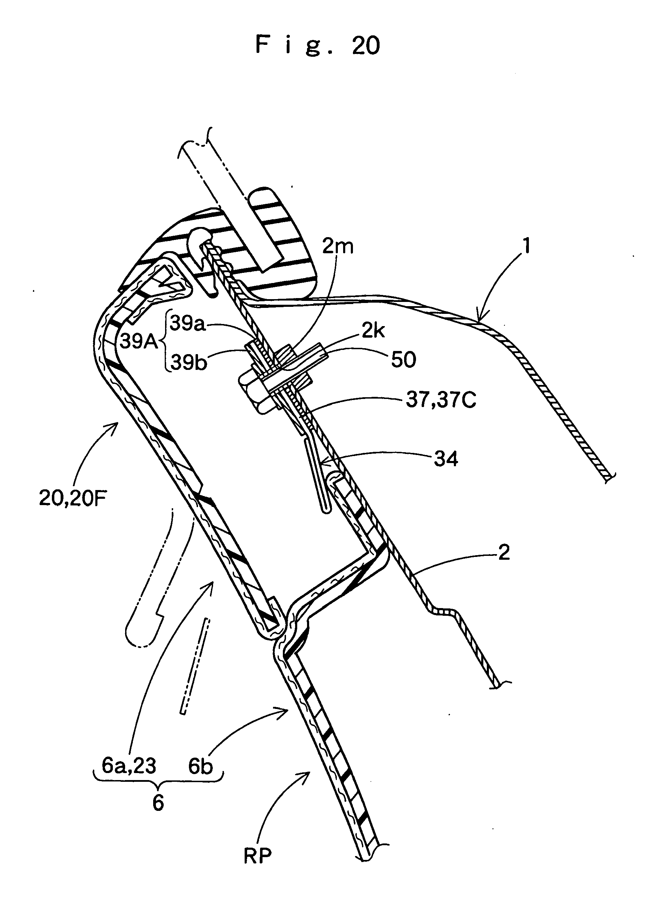

Although the first embodiment utilizes the assist grips 11 for fixing the end portions 53, 54, 55 and 56 of the split parts 20A, 20B and 20C, it will also be appreciated to locate assist grips away from end portions of split parts, as in a second embodiment of the head-protecting airbag device of the present invention shown in Figs. 17 to 20. In this head-protecting airbag device M2, fixing portions 13 of assist grips 11F and 11B fix split parts 20E and 20F of the airbag cover 19 and mounting portions 37 of the airbag 34 having brackets 39 applied thereto together.

In the second embodiment, the front split part 20E as constituent part of the airbag cover 19 includes a front pillar garnish portion 21 which serves as a front pillar garnish for covering the interior I of the front pillar FP, and a parting line Ab between the split part 20E and the following split part 20F is located above the center pillar CP as a middle pillar, i.e., rearward of the intersection K of the front pillar FP and the roof side rail RR.

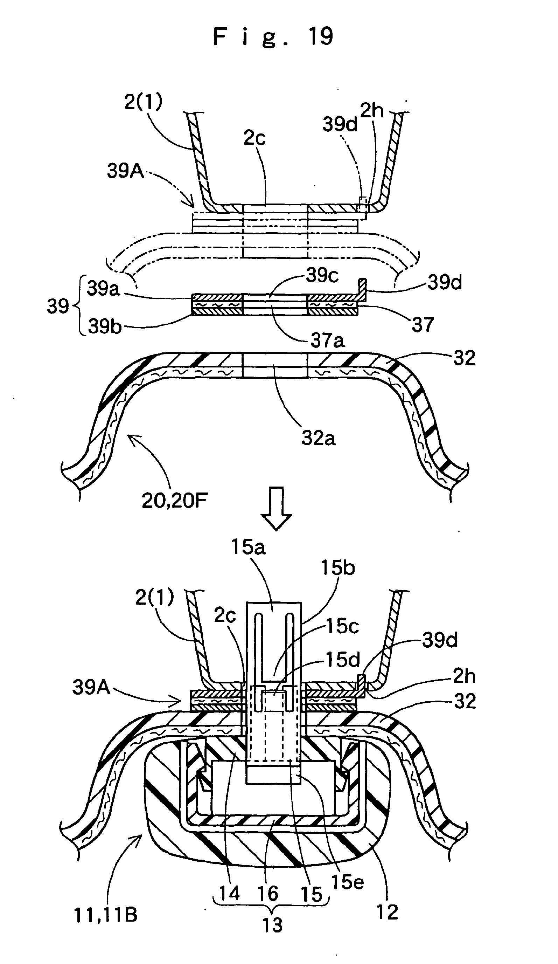

In the second embodiment, the airbag 34 is assembled with the split part 20E utilizing retaining legs 29c and 32b for retaining the mounting brackets 39, and thus the split part 20E, the folded airbag 34 having brackets 39 applied thereto, and an inflator 41 joined with the joint port 36 and having bracket 42 attached thereto are assembled into an airbag module A2. Three mounting brackets 39A located in the rear part of the airbag 34 are provided each with a hook 39d extending toward the exterior and downward from the outer plate 39b in an L-shape to be held in a hole 2h of the inner panel 2, as shown in Fig. 19. When the module A2 is attached to the inner panel 2, each of the hooks 39d is put in the hole 2h such that each of the mounting brackets 39A may not fall off. A rearmost mounting portion 37C of the airbag 34 is bolt 50 fixed to the inner panel 2 in mounting the airbag module A2 on the vehicle. The mounting bolt 50 is engaged with a nut 2m formed in a mounting hole 2k of the inner panel 2.

To mount the airbag device M2 on the vehicle, the airbag module A2 is mounted on the vehicle firstly, and then the split part 20F is attached to the inner panel 2 utilizing the mounting portions 27. Subsequently, the assist grips 11F and 11B are mounted on the vehicle by the through holes 32a of the seatings 32 and 32A, and the mounting holes 2c of the inner panel 2. Thus the airbag device M2 is mounted on the vehicle.

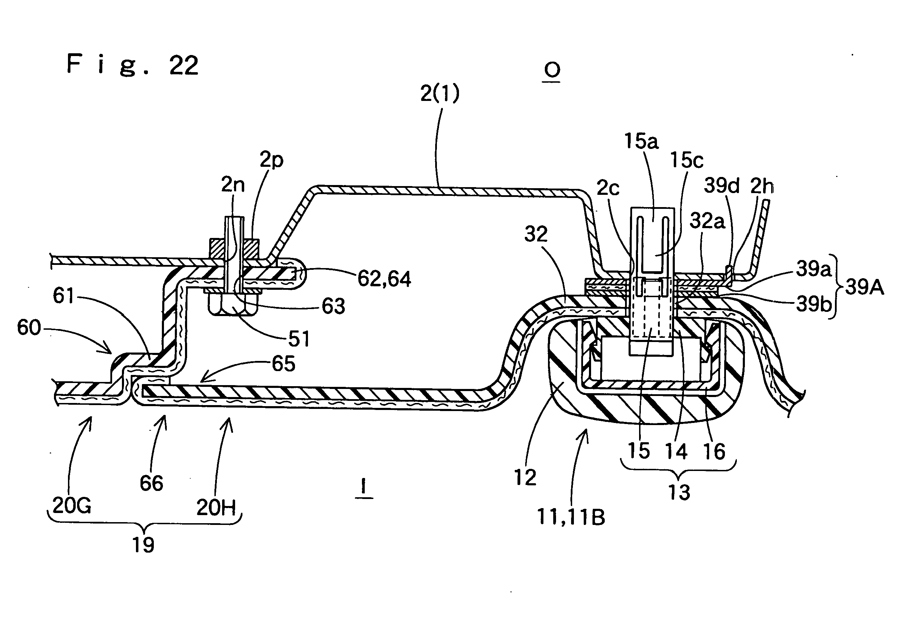

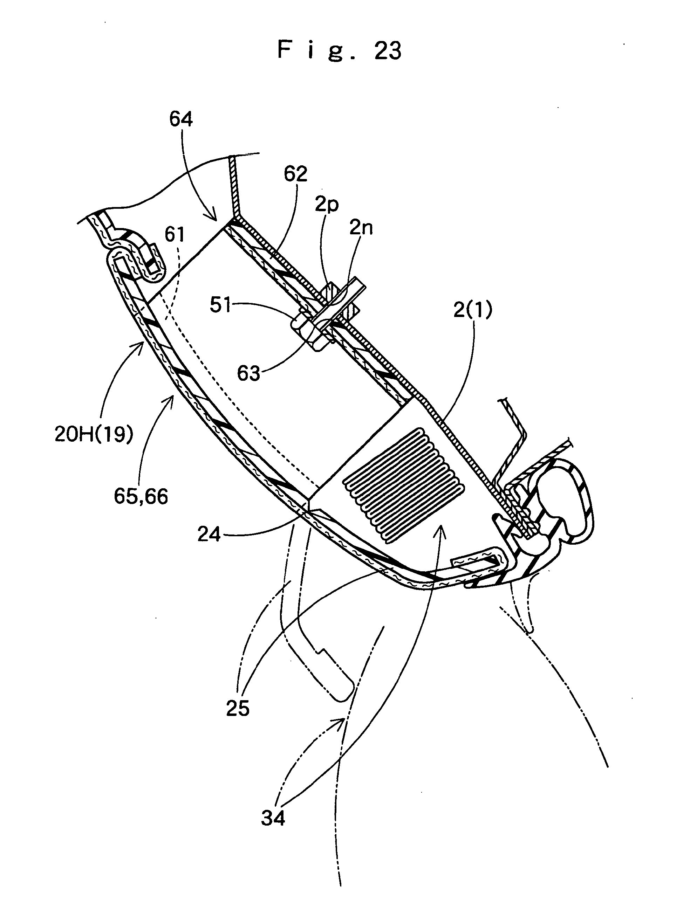

As in a third embodiment of the head-protecting airbag device shown in Figs. 21 to 23, end portions of the contiguous split parts may be arranged to overlap each other in the interior-exterior direction of the vehicle. More specifically, in this airbag device M3, one split part 20G out of split parts 20G and 20H constituting the airbag cover 19 is provided in its end portion 60 contiguous with the other split part 20H with a seating 62 having a mounting hole 63 for bolt 51 fixing to the inner panel 2.

The end portion 60 of the split part 20G has a step 61 for accommodating an end portion 65 of the split part 20H such that the interior surface may be flush when the end portion 65 is overlaid on the other end portion 60. The step 61 and the seating 62 are not formed in the arrangement position of the door portion 25 of the split part 20G so as not to hinder the opening of the door portions 25 of the split parts 20G and 20H.

The split part 20G is constructed such that its roof side rail portion 22 extending rearward from the upper end of its front pillar garnish portion 21 reaches the vicinity of the rear assist grip 11B.

In the third embodiment, the split part 20G includes mounting portions 29 and seatings 32A. The split part 20G, the folded airbag 34 having brackets 39 applied thereto, and an inflator 41 joined with the joint port 36 and having a bracket 42 attached thereto are assembled into an airbag module A3. The airbag device M3 is mounted on the vehicle by mounting the airbag module A3 on the vehicle, and attaching the split part 20H and assist grips 11F and 11B to the vehicle.

With this arrangement, portions 64 and 66 of the end portions 60 and 65 of the contiguous split parts 20G and 20H except the door portions 25 overlap each other in exterior-interior direction, and therefore, the split parts 20G and 20H are not easily separated from each other, and hardly exhibit the inner panel 2 from a gap otherwise caused between themselves. Therefore, unity in the appearance of the airbag cover 19 in the length direction is improved. Moreover, with this arrangement, out of the end portions 60 and 65 of the contiguous split parts 20G and 20H, the unexposed end portion 60 (or the step 61) is held by the end portion 65 (or the portion 66) exposed toward the interior I, and thus obtains a high rigidity. Accordingly, the end portion 60 is prevented from being unnecessarily twisted toward the interior I following the opening of the door portion 25 even if its fixing position to the vehicle body 1 is not located close to the edge of the end portion 60 in the front-rear direction. As a result, the end portion 60 is prevented from unnecessarily projecting toward the interior I. That is, although the illustrated embodiment shows the split part 20G having the seating 62 in the end portion 60, the seating 62 or a fixing position of the split part 20G to the inner panel 2 may be located in more forward position apart from the end portion 60. Out of the end portions 60 and 65 of the contiguous split parts 20G and 20H, the other end portion 65 exposed toward the interior I is also prevented from projecting toward the interior I unnecessarily, since a fixing position to the vehicle body 1, or the seating 32, in the illustrated embodiment, is located close to the end portion 65.

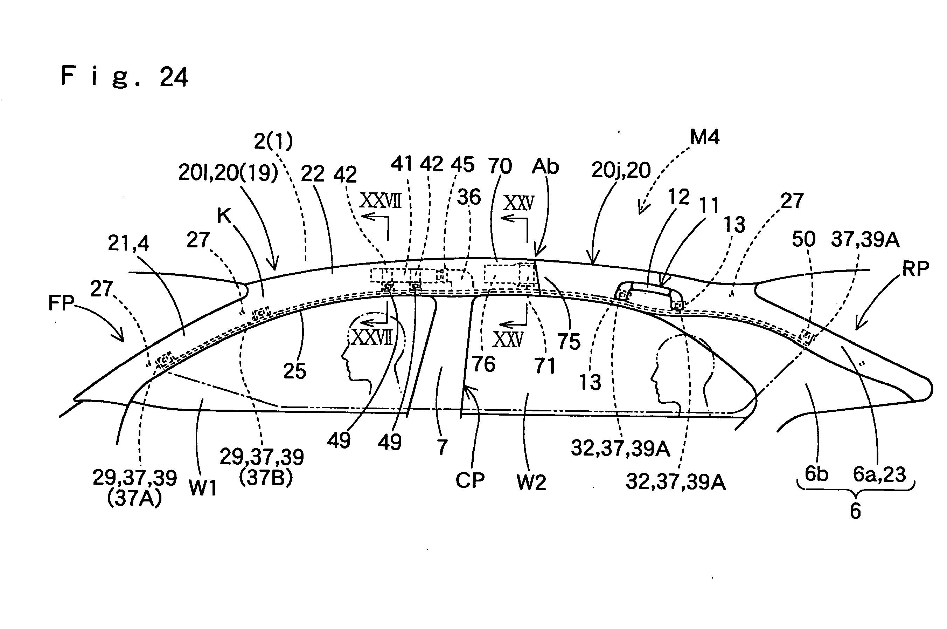

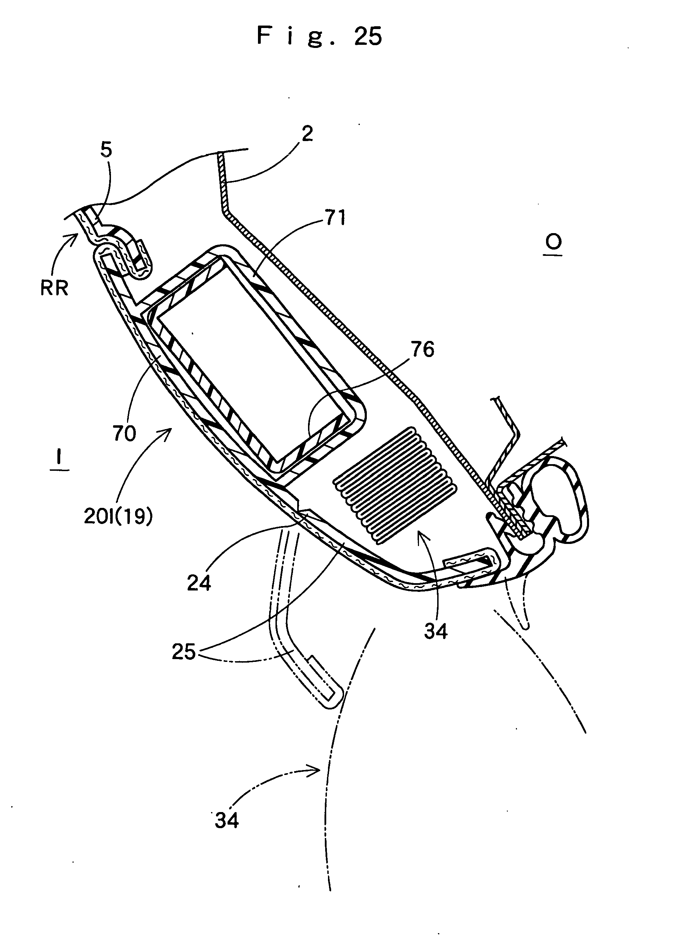

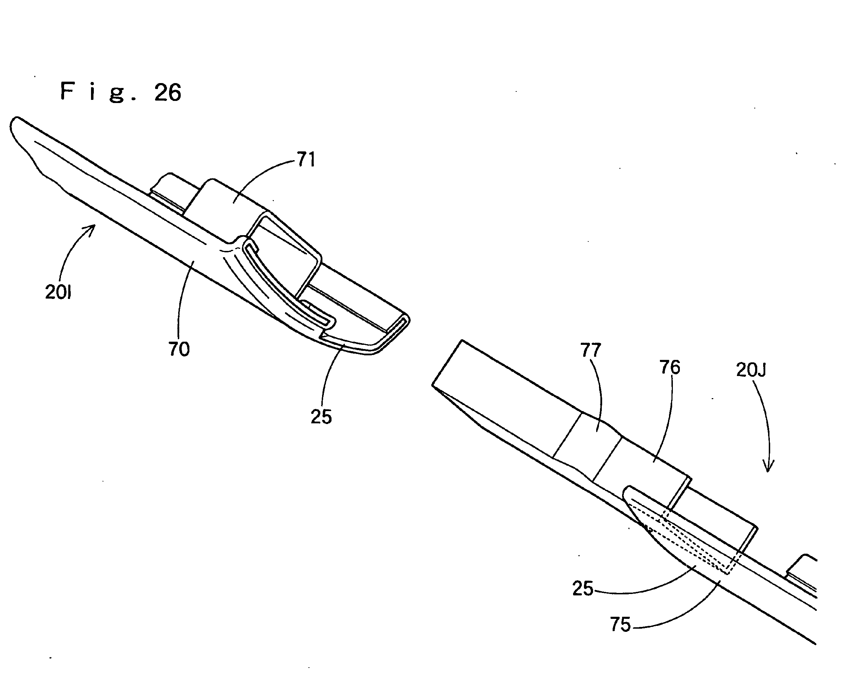

In case of overlaying end portions of contiguous split parts on each other in the exterior-interior direction, a fourth embodiment of the head-protecting airbag device of the present invention shown in Figs. 24 to 27 may be adopted.

In the fourth embodiment, end portions 70 and 75 of two split parts 20I and 20J constituting the airbag cover 19 are constructed such that one is insertable into the other substantially in front-rear direction, and thus are prevented from shifting in the vertical direction and in the exterior-interior direction (i.e., in the left-right direction). More specifically, the end portion 70 is provided with a square tubular fitting portion 71 while the end portion 75 is provided with a fitting portion 76 which has a U-shaped section and is set in the fitting portion 71. The fitting portion 76 is provided with a projection 77 for preventing the fitting portion 76 from coming off from the fitting portion 71 easily. The projection 77 passes through the fitting portion 71 and is held in the periphery of the fitting portion 71.

This arrangement enhances the rigidity of the coupled end portions 70 and 75, and therefore, fixing positions of the end portions 70 and 75 to the vehicle body 1 do not need to be located close to the end portions 70 and 75, or to be made tightly. As a result, means and processes for fixing the entire airbag cover 19 to the vehicle body 1 are reduced. Moreover, the end portions 70 and 75 are easy to couple with by only setting the fitting portion 76 into the fitting portion 71, which facilitates the mounting work of the split parts 20I and 20J on the vehicle.

The fitting portions 71 and 76 of the end portions 70 and 75, respectively, do not necessarily have to be formed into tubular shapes as long as they have set-in construction in substantially front-rear direction and are prevented from shifting in the vertical and exterior-interior directions. For example, the fitting portion 71 in the split part 20I may include a first retaining piece to abut against the top surface of a fitting portion 76 and capable of retaining the exterior end portion of the top surface of the fitting portion 76, and a second retaining piece to abut against the lower surface of the fitting portion 76 and capable of retaining the exterior end portion of the lower surface of the fitting portion 76. When these retaining pieces are formed in the split part 201, the fitting portion 76 in the split part 20J does not have to be formed into a tubular shape, but can be constructed of two upper and lower plate portions confronting each other in the vertical direction, both of which project toward the exterior generally in parallel to each other. In this case, the abovementioned retaining pieces retain these two plate portions.

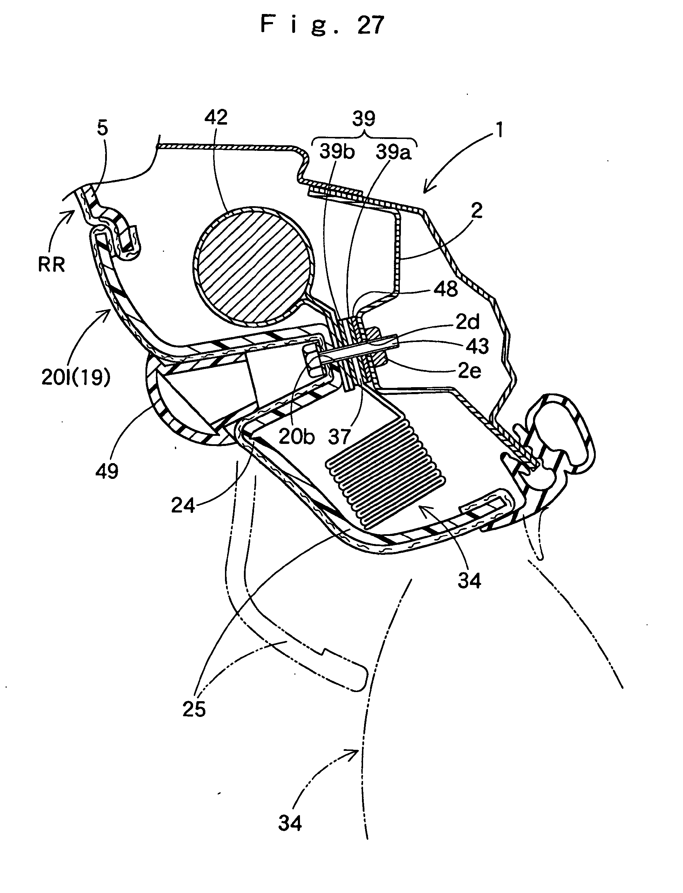

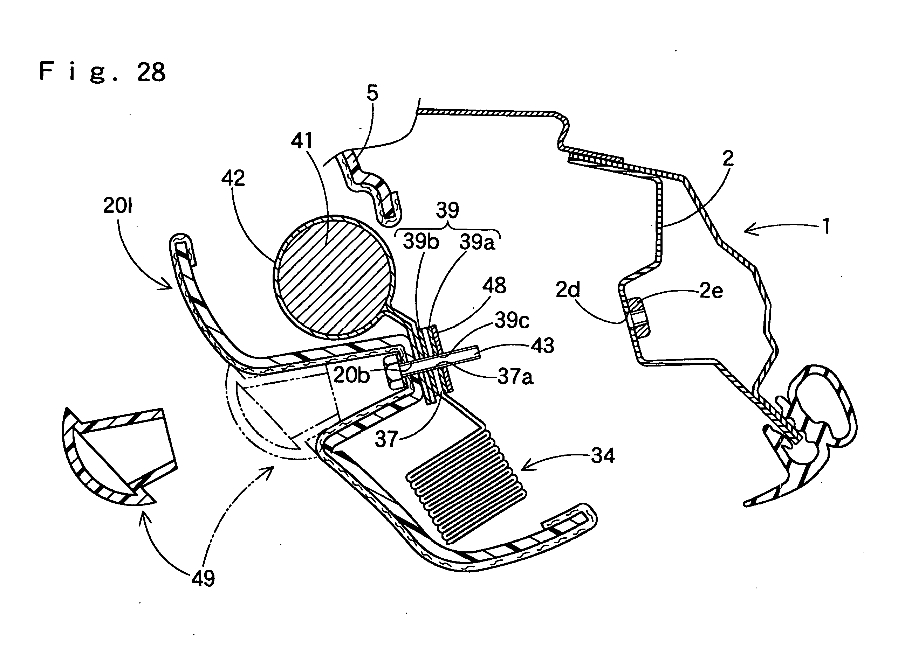

In the airbag device M4, as shown in Figs. 24 and 27, when mounting brackets (as will be called mounting portions) 42 of the inflator 41 are fixed to the inner panel 2 by bolts 43, a part of the split part 20I in the vicinity of the inflator 41 is secured to the inner panel 2 together. At this time, each of the bolts 43 is assembled with the split part 20I by being inserted through a mounting hole 20b formed in the split part 20I, and fastened into a spring washer 48, as shown in Fig. 28. After fixing the bolts 43 into nuts 2e of the inner panel 2, caps 49 are set in the periphery of the mounting holes 20b of the split part 20I for hiding the heads of the bolts 43.

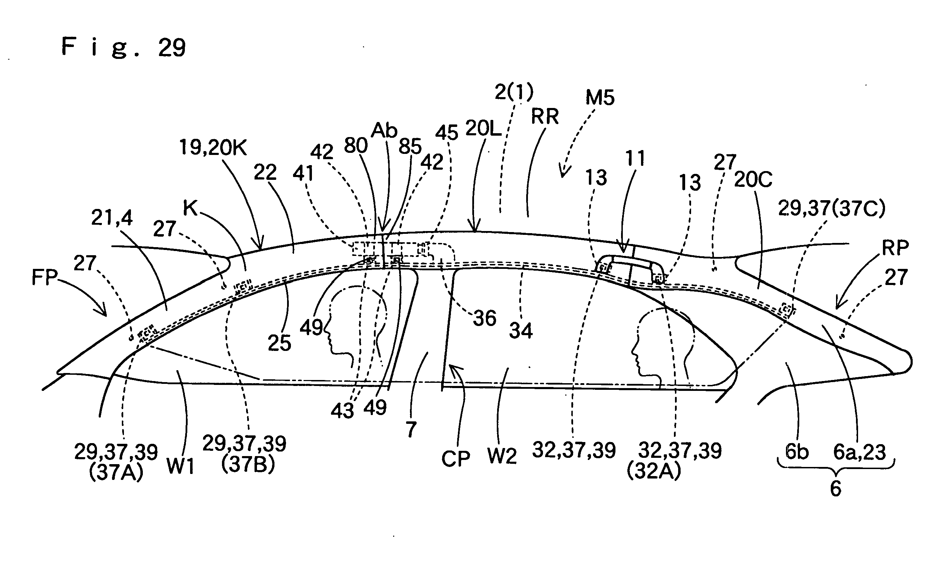

When the inflator 41 is fixed to the vehicle body 1, end portions 80 and 85 of contiguous split parts 20K and 20L of the airbag cover 19 may be fixed together as in a fifth embodiment of the head-protecting airbag device of the present invention, i.e., as in a head-protecting airbag device M5 shown in Fig. 29. With this arrangement, the end portions 80 and 85 of the contiguous split parts 20K and 20L are fixed together with the inflator 41 when fixing the front and rear mounting portions 42 of the inflator 41 to the vehicle body 1. Therefore, means and processes for fixing the split parts 20K and 20L to the vehicle body 1 are reduced. Of course, since the mounting portions 42 of the inflator 41 help secure the end portions 80 and 85 of the contiguous split parts 20K and 20L to the body 1 together with the inflator 41, the end portions 80 and 85 of the split parts 20L and 20K do not necessarily project inward when the door portion 25 opens.

In the fifth embodiment, the airbag cover 19 is composed of the frontmost split part 20K, a rearmost split part 20C, which is similar to that in the first embodiment, and the split part 20L in the middle. The split part 20K includes a front pillar garnish portion 21 and a roof side rail portion 22 extending rearward beyond the intersection K, and a parting line Ab between the split part 20K and the following split part 20L is located in the vicinity of the head MH of a front seat occupant. Each of the end portions 80 and 85 of the split parts 20K and 20L is provided with a mounting hole 20b through which the bolt 43 is inserted, and is secured to the inner panel 2 with a similar arrangement to Figs. 27 and 28.

Although the foregoing embodiments show the head-protecting airbag devices M1, M2, M3, M4 and M5 mounted on a vehicle with one center pillar CP between a front pillar FP and a rear pillar RP, the airbag devices may be mounted on a vehicle with more than one or two middle pillars between the front pillar FP and the rear pillar RP.

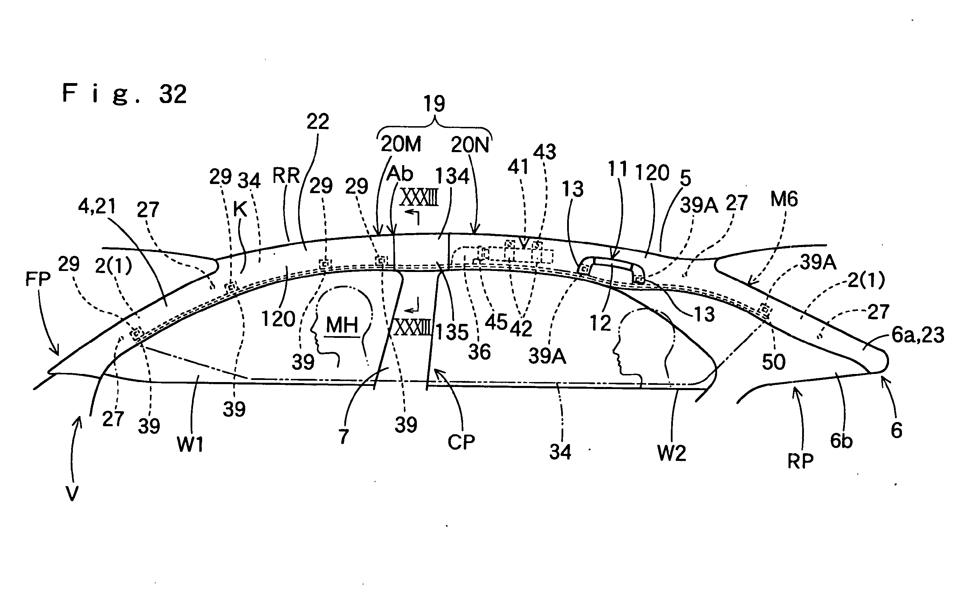

The airbag device may be constructed as a head-protecting airbag device M6 shown in Figs. 32 to 35, which is a sixth embodiment of the present invention. The airbag cover 19 in the sixth embodiment includes two split parts 20 (20M and 20N) split in the front-rear direction, and a joint portion 134 separate from the split parts 20M and 20N and located between the split parts 20M and 20N. The joint portion 134 is located above the center pillar CP. Each of the split parts 20M and 20N and the joint portion 134 is made from synthetic resin such as PC (polycarbonate)/ABS, polypropylene with filler, or thermo-plastic elastomer of polyolefin.

Each of the split parts 20M and 20N includes a main body 120 for covering the interior side of the airbag 34, and amounting portion 125 projecting toward the joint portion 134 in the front-rear direction from the edge 120a of the main body 120 toward the joint portion 134. The main body 120 is provided entirely along its lower edge with a door portion 25 that is pushed open by the airbag 34 upon deployment of the airbag 34. Along the upper edge of the door portion 25 is a thinned hinge line 24 for helping open the door portion 25.

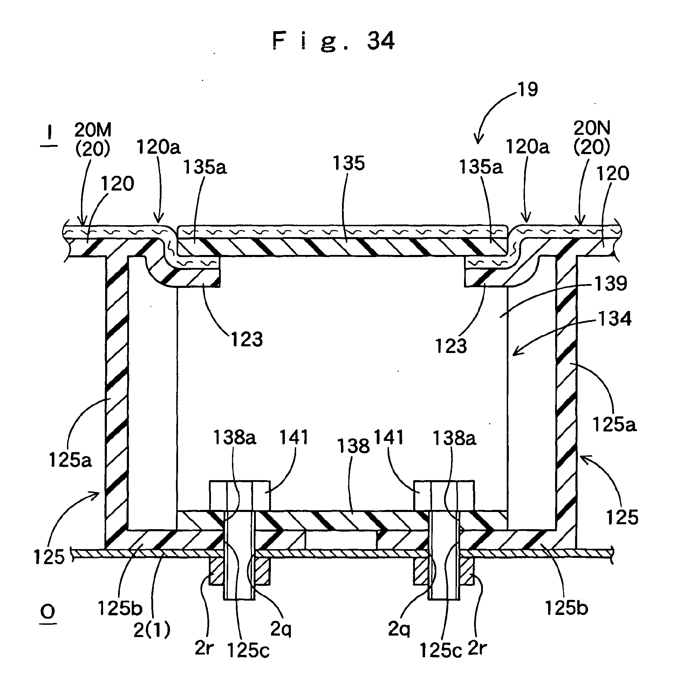

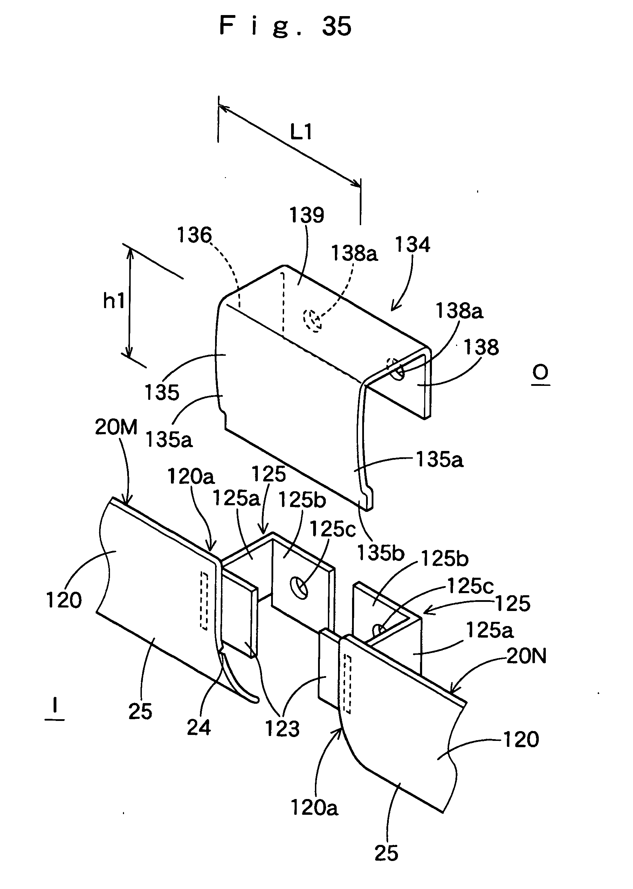

As shown in Fig. 35, each of the mounting portions 125 is formed to have a substantially L-shaped section as viewed from above. Each of the mounting portions 125 includes a connecting portion 125a projected toward the exterior O from the vicinity of the edge 120a of the main body 120, and a mounting plate portion 125b projected toward the joint portion 134 from the leading end of the connecting portion 125a. As shown in Figs. 34 and 35, each of the mounting plate portions 125b is exposed from the main body 120 when a later-described cover portion 135 of the joint portion 134 is not located. Each of the connecting portions 125a is formed vertically along the edge 120a of the main body 120 in a plate shape. Each of the connecting portions 125a is arranged above the hinge line 24 so as not to interfere with the airbag 34 housed along the lower edge of the main body 120 in the front-rear direction. Each of the mounting plate portions 125b also has a plate shape disposed along the vertical direction, and is provided with a mounting hole 125c for inserting a mounting bolt 141 for attachment to the inner panel 2 of the body 1 therethrough.

Each of the main bodies 120 is provided in the vicinity of the edge 120a with a fin 123 to be abutted against the exterior side O of the edge 135a of the cover portion 135 of the joint portion 134. The fins 123 are integrally formed with the main bodies 120. Even if a gap arises between the main body 120 and the cover portion 135, the fins 123 prevents the mounting portions 125 from being exposed toward the interior from the gap. In the sixth embodiment, the fins 123 are so bent that the edges 120a of the main body 120 may be located in the exterior side O of the cover portion 135. The fins 123 are arranged above the hinge line 24 such that the door portion 25 opens smoothly upon deployment of the airbag 34. Since the fins 123 thus abut against the exterior side O of edge portions 135a of the cover portion 135, the entire cover portion 135 is prevented from recessing toward the exterior O. Of course, without considering these points, the fins 123 may be omitted. In the sixth embodiment, the main bodies 120 of the split parts 20M and 20N are arranged to be substantially flush with the cover portion 135 of the joint portion 134 in the interior I surface, as shown in Fig. 34. The main bodies 120 of the individual split parts 20M and 20N include three kinds of mounting portions 27, 29 and 32 (including 32A) in addition to the mounting portion 125, as in the first embodiment.

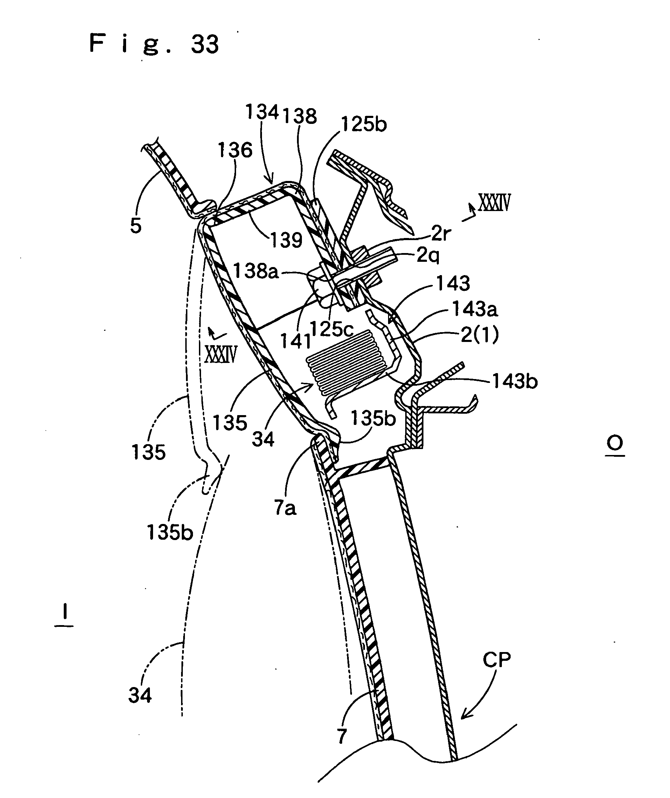

As shown in Fig. 32, the joint portion 134 is located above the center pillar CP. The dimension L1 of the joint portion 134 in the front-rear direction, as referred to Fig. 35, is predetermined substantially the same as the dimension of the upper part of the center pillar garnish 7 in the front-rear direction. The vertical dimension h1 of the joint portion 134, as also referred to Fig. 35, is predetermined substantially the same as the vertical dimensions of the main bodies 120 of the split parts 20M and 20N. The joint portion 134 has a substantially inversed-U shaped section along the exterior-interior direction, as shown in Figs. 33 and 35, and includes a cover portion 135 located toward the interior I for covering the interior side I of the folded airbag 34, and a mounting portion 138 located toward the exterior O and fixed together with the mounting portions 125 of the split parts 20M and 20N. The cover portion 135 and the mounting portion 138 are connected in the vicinity of the upper end by a connecting portion 139.

The cover portion 135 is provided near the upper end with a hinge line 136 extending along the front-rear direction, and thereby easily opens together with the door portions 25 of the split parts 20M and 20N when the door portions 25 open. The lower edge 135b of the cover portion 135 is retained by the upper end 7a of the center pillar garnish 7, as shown in Fig. 33.

The mounting portion 138 includes two mounting holes 138a which are arranged along the front-rear direction and correspond to the mounting holes 125c in the mounting portions 125 of the split parts 20M and 20N. The mounting bolts 141 are inserted through the mounting holes 138a for securing the joint portion 134 to the inner panel 2 together with the split parts 20M and 20N. The mounting bolts 141 are inserted into the mounting holes 138a of the mounting portion 138 and the mounting holes 125c of the mounting portions 125, and then engaged with nuts 2r formed in the peripheries of mounting holes 2q of the inner panel 2. In the sixth embodiment, the mounting portion 138 is located inward I of the mounting portions 125 of the split parts 20M and 20N, as shown in Figs. 33 and 34.

As shown in Fig. 33, there is arranged a restraining member 143 above the center pillar CP or in the exterior O of the joint portion 134, for helping the airbag 34 to protrude toward the interior I. This restraining member 143 has a substantially L-shaped section, and is located in the upper level than the upper end 7a of the center pillar garnish 7. The restraining member 143 is secured to the inner panel 2 at not-shown positions. More specifically, the restraining member 143 includes a vertical wall 143a located in the exterior side O of the airbag 34, and a horizontal wall 143b located below the airbag 34. The horizontal wall 143b slopes down toward the interior I so as to guide the airbag 34 to protrude toward the interior I without being interfered with the upper end 7a of the center pillar garnish 7 upon deployment of the airbag 34.

In the sixth embodiment, thickness of the cover portion 135 is preset substantially the same as those of the main bodies 120 of the split parts 20M and 20N. It is desirable that the dimension of the joint portion 134 in the front-rear direction is so set that the cover portion 135 may not be twisted along with the deformation of the edges 120a of the split parts 20 even if the edge 120a of at least one of the split parts 20 is deformed to open in the horizontal direction (in other words, even if the rear edge of the split part 20M rides up forward or even if the front edge of the split part 20N rides up rearward). Of course, it will also be appreciated to compose the joint portion 134 of more rigid material than the split parts 20M and 20N, or to provide the cover portion 135 with reinforcing ribs projected toward the exterior O. When the cover portion 135 is made rigid as described above, the dimension of the joint portion 134 in the front-rear direction can be lengthened in comparison with a case where the cover portion 135 has less rigidity.

The head-protecting airbag device M6 is mounted on the vehicle in substantially the same manner as the second embodiment. That is, an airbag module is assembled of the split part 20M, the airbag 34 having the mounting brackets 39 applied thereto, and the inflator 41 having the mounting bracket 42 attached thereto, and this airbag module including the split part 20M, the airbag 34 and the inflator 41, and the split part 20N are secured to the inner panel 2 of the vehicle body 1 utilizing the mounting portions 27, 29, the assist grip 11 and the mounting bolts 43. Then the joint portion 134 is located between the split parts 20M and 20N, the cover portion 135 of the joint portion 134 is opened around the hinge line 136, and the mounting portions 125 projected from the main bodies 120 of the split parts 20M and 20N are bolt 141 fixed to the inner panel 2 together with the mounting portion 138 of the joint portion 134. Thus the airbag device M6 is mounted on the vehicle V.

In the head-protecting airbag device M6, the airbag cover 19 is composed of two split parts 20M and 20N split in the front-rear direction, and these contiguous split parts 20M and 20N are secured to the vehicle body 1 by the mounting portions 125 projecting forward or rearward from the vicinities of the respective edges 120a of the main bodies 120 toward the joint portion 134. In other words, by securing the mounting portions 125 to the vehicle body 1, each of the edges 120a of the main bodies 120 of the contiguous split parts 20M and 20N toward the joint portion 134 are prevented from opening along the horizontal direction, i.e., the rear edge of the split part 20M is prevented from riding up forward, or the front edge of the split part 20N is prevented from riding up rearward. Consequently, the edges 120a of the main bodies 120 of the split parts 20M and 20N toward the joint portion 134 are prevented from being deformed and opening along the horizontal direction upon deployment of the airbag 34, and the edges 120a of the main bodies 120 are suppressed from being twisted. Therefore, the door portions 25 of the split parts 20M and 20N are able to open smoothly, and the airbag 34 is able to protrude toward the interior I smoothly.

In the head-protecting airbag device M6, moreover, the mounting portions 125 formed in the vicinities of the respective edges 120a of the split parts 20M and 20N toward the joint portion 134 are projected in the front or rear direction from the edges 120a of the main bodies 120. That is, without the cover portion 135 of the joint portion 134, the mounting portions 125 are projected from the main bodies 120 and exposed toward the interior I, so that fixing work of the mounting portions 125 to the vehicle body 1 is facilitated. In addition, the mounting portions 125, after being fixed, are covered at the interior sides I by the cover portion 135 of the joint portion 134. Accordingly, the mounting portions 125 are not visible from the interior I, so that the appearance from the interior I is good. The cover portion 135 of the joint portion 134 then opens smoothly around the hinge line 136 upon airbag 34 deployment and allows the airbag 34 to protrude toward the interior in cooperation with the main bodies 120 of the split parts 20M and 20N.

In the head-protecting airbag device M6, therefore, the airbag cover 19 is able to open smoothly upon deployment of the airbag 34, even in a condition that the airbag cover 19 is formed separately from the roof head lining 5, and is constructed of a plurality of parts split in the front-rear direction.

Of course, in this sixth embodiment, too, a parting line Ab between the split part 20M and the split part 20N of the airbag cover 19 arranged from the front pillar FP along the roof side rail RR is located rearward of the head MH of an occupant seated in the front seat, i.e., rearward of the intersection K of the front pillar FP and the roof side rail RR, so that the appearance is improved in the side of the front seat. The parting line Ab in this case appears in the border of the cover portion 135 of the joint portion 134 interposed between the split parts 20M and 20N, and the front split part 20M.

In the head-protecting airbag device M6, the mounting portion 138 of the joint portion 134 is secured to the vehicle body 1 by the bolts 141 together with the mounting portions 125 of the split parts 20M and 20N. In other words, the mounting bolts 141 for fixing the mounting portions 125 of the split parts 20M and 20N are also used to fix the mounting portion 134, so that number of parts is reduced, and manufacturing processes and cost are reduced. Although the sixth embodiment shows the mounting bolt 141 as a fixing member to fix the mounting portions 125 of the split parts 20M and 20N and the mounting portion 138 of the joint portion 134, the fixing member should not be limited thereby. For example, the retaining pieces 15 or 30 used in the mounting portions 29 of the split part 20M or in the fixing portions 13 of the assist grip 11 may be used as the fixing member.

In the head-protecting airbag device M6, moreover, the joint portion 134 is located above the center pillar CP. Inside I of the center pillar CP is the pillar garnish 7 protruded toward the interior I than the side windows W1 and W2 located therearound, and therefore, a part of the airbag 34 disposed above the center pillar CP expands largely toward the interior I so as not to be interfered with the upper end 7a of the pillar garnish 7. Especially in the head-protecting airbag device M6, this part is provided with the restraining member 143 for guiding the deployment direction of the airbag 34, and therefore, the airbag 34 protrudes toward the interior I even more forcefully.

In the head-protecting airbag device M6, however, the edges 120a of the main bodies 120 of the contiguous split parts 20M and 20N above the center pillar CP are secured to the inner panel 2 of the vehicle body 1 by the mounting portions 125 located nearby and the mounting bolts 141. Therefore, even if the airbag 34 protrudes toward the interior forcefully, the edges 120a of the main bodies 120 of the contiguous split parts 20M and 20N toward the joint portion 134 are prevented from being deformed to open along the horizontal direction.

In the sixth embodiment, furthermore, the dimension L1 of the cover portion 135 in the front-rear direction is predetermined substantially the same as the dimension of the upper edge part of the center pillar garnish 7 in the front-rear direction. Accordingly, the front and rear edges of the center pillar garnish 7 and the front and rear edges of the cover portion 135 are aligned, which improves the appearance as viewed from the interior I.

Of course, without considering above points, the joint portion 134 does not necessarily have to be located above the center pillar CP, but may be located in the upper edges of the windows W1 and W2, instead, for example. In addition, although the head-protecting airbag device M6 shows the airbag cover 19 including two split parts 20M and 20N and one joint portion 134 located between the split parts 20M and 20N, the airbag cover may, for example, include split parts split in more than two in the front-rear direction, and more than one joint portions located therebetween.

In the head-protecting airbag device according to the present invention, an airbag is folded and arranged inside a vehicle from a front pillar on to a roof side rail in the upper peripheries of a plurality of side windows while being covered by an airbag cover. The airbag inflates when fed with inflation gas, pushes open a door portion formed in the lower periphery of the airbag cover, and then protrudes for covering the side windows. The airbag cover is located below a roof head lining and formed separately from the roof head lining. The airbag cover includes a plurality of parts split in the front-rear direction. The split part located foremost covers the interior side of the front pillar, and is extensively located up to an area rearward of an intersection of the front pillar and the roof side rail. Therefore, the head-protecting airbag device of the present invention has an improved appearance in the side of the front seat.

## Claims

1. A head-protecting airbag device comprising an airbag (34) and an airbag cover (19), such device being suitable for being mounted in a vehicle in such a way that the airbag (34) is folded and arranged inside a vehicle from a front pillar (FP) on to a roof side rail (RR) in the upper peripheries of a plurality of side windows while being covered by the airbag cover (19), the airbag cover (19) being located below a roof head lining (5) and formed separately from the roof head lining (5); and the airbag (34) inflates when fed with inflation gas, pushes open a door portion (25) formed in the lower periphery of the airbag cover (19), and then protrudes for covering the side windows, **characterized in that**:
the airbag cover (19) comprises a plurality of parts split in the front-rear direction; and
the split part (20A) located foremost is to cover the interior side of the front pillar (FP), and to extend up to an area rearward of an intersection of the front pillar (FP) and the roof side rail (RR).

2. The head-protecting airbag device according to Claim 1, wherein a parting line between the foremost split part (20A) and a following split part (20B) is to be located near an occupant's head seated in the front seat, or rearward of the occupant's head.

3. The head-protecting airbag device according to Claim 1, wherein a split part (20C) located rearmost is to cover at least an upper part of a rear pillar (RP) inside the vehicle.

4. The head-protecting airbag device according to Claim 1, wherein:
at least one assist grip (11F, 11B) is located in the arrangement area of the airbag cover (19), the assist grip (11F, 11B) being provided in the front and rear ends with fixing portions for fixation to the vehicle body;
the front and rear fixing portions of the assist grip (11F, 11B) are located across contiguous end portions of a pair of contiguous split parts (20A, 20B, 20C) of the airbag cover (19); and
the end portions of the contiguous split parts (20A, 20B, 20C) are secured to the vehicle body together when the fixing portions are fixed to the vehicle body.

5. The head-protecting airbag device according to Claim 4, wherein each of the fixing portions of the assist grip (11F, 11B) comprises a retaining piece (30), the retaining piece (30) being detachably fixable to an inner panel of the vehicle body by being inserted into a mounting hole in the inner panel.

6. The head-protecting airbag device according to Claim 4, wherein:
the airbag cover (19) includes more than two parts (20) split in the front-rear direction; and
the assist grip (11F, 11B) is located across at least one pair of contiguous split parts (20A, 20B, 20C).

7. The head-protecting airbag device according to Claim 6, wherein all the contiguous split parts (20A, 20B, 20C) are provided at the end portions thereof with the assist grip (11F, 11B)s.

8. The head-protecting airbag device according to Claim 1, wherein:
the airbag (34), an inflator for feeding the airbag (34) with inflation gas, and at least one of the split parts (20A, 20B, 20C) are assembled into an airbag module (A1); and
the airbag(34), the inflator and the split part are mountable on the vehicle by attaching the airbag module (A1) to the vehicle.

9. The head-protecting airbag device according to Claim 8, wherein:
the airbag (34) includes a plurality of mounting portions, each having a mounting hole, for attaching the airbag (34) to the vehicle body; and
one of the split parts (20A, 20B, 20C) as constituent part of the airbag module (A1) comprises a plurality of mounting members detachably fixable to an inner panel of the vehicle body together with the mounting portions of the airbag (34) by being inserted into the mounting hole of the mounting portion of the airbag (34), thereby retaining the airbag mounting portion, and by then being inserted into a mounting hole in the inner panel.

10. The head-protecting airbag device according to Claim 9, wherein the split part as set forth in claim 9 comprises a second mounting member detachably fixable to the inner panel of the vehicle body without involving the mounting portion of the airbag (34) by being inserted into a mounting hole of the inner panel.

11. The head-protecting airbag device according to Claim 1, wherein:
the airbag (34) includes a plurality of mounting portions for attaching the airbag (34) to the vehicle body; and
at least one assist grip (11F, 11B) is located in the arrangement area of the airbag cover (19), the assist grip (11F, 11B) being provided in the front and rear ends with fixing portions for fixation to the vehicle body;
each of the fixing portions of the assist grip (11F, 11B) comprises a retaining piece (30), the retaining piece (30) being detachably fixable to an inner panel of the vehicle body by being inserted into a mounting hole in the inner panel; and
each of the fixing portions of the assist grip (11F, 11B) to fix the mounting portions of the airbag (34) and the split part together to the inner panel by the retaining piece (30).

12. The head-protecting airbag device according to Claim 1, wherein an end portion of one of contiguous split parts (20A, 20B, 20C) overlaps an end portion of the other split part on the interior side.

13. The head-protecting airbag device according to Claim 1, wherein end portions of a pair of contiguous split parts (20A, 20B, 20C) comprise a pair of fitting portions fittable to each other,
whereby the end portions are prevented from shifting in the vertical direction and in the exterior-interior direction.

14. The head-protecting airbag device according to Claim 1, wherein:
an inflator for feeding the airbag (34) with inflation gas is securable to the vehicle body by at least two mounting portions located in the front and rear therein; and
contiguous end portions of a pair of contiguous split parts (20A, 20B, 20C) are fixed to the vehicle body together when the two front and rear mounting portions of the inflator are fixed to the vehicle body.

15. The head-protecting airbag device according to Claim 1, wherein:
the device further comprises a joint portion (134) formed separately from the split parts (20A, 20B, 20C), the joint portion (134) being located between any pair of contiguous split parts (20A, 20B, 20C);
each of the pair of the contiguous split parts (20A, 20B, 20C) comprises:
a main body for covering the interior side of the airbag (34), the main body including the door portion (25); and
a mounting portion projecting in the front-rear direction from an edge portion of the main body toward
the joint portion (134) to be fixed to the vehicle body; and the joint portion (134) comprises:
a mounting portion to be fixed to the vehicle body; and
a cover portion (135) for covering the interior side of the mounting portions of the contiguous split parts (20A, 20B, 20C), the cover portion (135) being openable upon airbag (34) deployment, together with the door portion (25)s of the split parts (20A, 20B, 20C), for allowing the airbag (34) to protrude toward the vehicle's interior.

16. The head-protecting airbag device according to Claim 15, wherein the mounting portion of the joint portion (134) is securable to the vehicle body together with the mounting portions of the contiguous split parts (20A, 20B, 20C).

17. The head-protecting airbag device according to Claim 15, wherein:
the airbag (34) upon deployment is to cover the interior sides of the side windows juxtaposed in the front-rear direction and the interior side of a middle pillar (CP) located between the side windows; and
the joint portion (134) is to be located above the middle pillar (CP).

18. The head-protecting airbag device according to Claim 17, wherein the dimension of the cover portion (135) of the joint portion (134) in the front-rear direction is substantially the same as the dimension of the vicinity of the upper edge of a pillar garnish in the front-rear direction, the garnish covering the interior side of the middle pillar (CP).

19. The head-protecting airbag device according to Claim 15, wherein each of the main bodies of the contiguous split parts (20A, 20B, 20C) includes a fin in the edge portion thereof toward the joint portion (134), the fin being formed integrally with the main body above the door portion (25) to abut against the exterior side of the cover portion (135).

## Patentansprüche

1. Kopfschutzairbagvorrichtung mit einem Airbag (34) und einer Airbagabdeckung (19), wobei diese Vorrichtung zu einer solchen Montage in einem Fahrzeug geeignet ist, dass der Airbag (34) gefaltet und innerhalb eines Fahrzeuges von einer Vordersäule (FP) bis zu einer Dachseitenschiene (RR) in den oberen Umfangsbereichen einer Vielzahl von Seitenfenstern angeordnet wird, wobei er von der Airbagabdeckung (19) abgedeckt wird, die unterhalb einer Dachkopfauskleidung (5) angeordnet wird und separat von der Dachkopfauskleidung ausgebildet ist, wobei der Airbag (34) aufgeblasen wird, wenn er mit einem zum Aufblasen dienenden Gas beschickt wird, einen im unteren Umfangsbereich der Airbagabdeckung (19) ausgebildeten Türabschnitt (25) aufdrückt und dann vorsteht, um die Seitenfenster abzudecken, **dadurch gekennzeichnet, dass** die Airbagabdeckung (19) eine Vielzahl von Teilen aufweist, die in Vorwärts-Rückwärts-Richtung voneinander getrennt sind, und dass das am weitesten vorne angeordnete getrennte Teil (20A) zur Abdeckung der Innenseite der Vordersäule (FP) dient und sich bis zu einem Bereich hinter dem Schnittpunkt zwischen der Vordersäule (FP) und der Dachseitenschiene (RR) erstreckt.

2. Kopfschutzairbagvorrichtung nach Anspruch 1, bei der die Trennlinie zwischen dem am weitesten vorne angeordneten getrennten Teil (20A) und dem nachfolgenden getrennten Teil (20B) in der Nähe des Kopfes eines auf dem Vordersitz sitzenden Fahrzeuginsassen oder hinter dem Kopf des Fahrzeuginsassen anzuordnen ist.

3. Kopfschutzairbagvorrichtung nach Anspruch 1, bei der ein am weitesten hinten angeordnetes getrenntes Teil (20D) zur Abdeckung von mindestens einem oberen Teil einer hinteren Säule (RP) innerhalb des Fahrzeuges dient.

4. Kopfschutzairbagvorrichtung nach Anspruch 1, bei der mindestens ein Unterstützungsgriff (11F, 11B) im Anordnungsbereich der Airbagabdeckung (19) angeordnet ist, der im vorderen und hinteren Endbereich mit Fixierabschnitten zur Fixierung an der Fahrzeugkarosserie versehen ist, wobei der vordere und hintere Fixierabschnitt des Unterstützungsgriffes (11F, 11B) über angrenzende Endabschnitte eines Paares von angrenzenden getrennten Teilen (20A, 20B, 20C) der Airbagabdeckung (19) angeordnet und die Endabschnitte der angrenzenden getrennten Teile (20A, 20B, 20C) zusammen an der Fahrzeugkarosserie befestigt werden, wenn die Fixierabschnitte an der Fahrzeugkarosserie befestigt werden.

5. Kopfschutzairbagvorrichtung nach Anspruch 4, bei der jeder der Fixierabschnitte des Unterstützungsgriffes (11F, 11B) ein Halteteil (30) umfasst, das lösbar an einem Innenpaneel der Fahrzeugkarosserie befestigbar ist, indem es in ein Montageloch im Innenpaneel eingesetzt wird.

6. Kopfschutzairbagvorrichtung nach Anspruch 4, bei der die Airbagabdeckung (19) mehr als zwei in Vorwärts-Rückwärts-Richtung getrennte Teile (20) aufweist und der Unterstützungsgriff (11F, 11B) über mindestens ein Paar von aneinandergrenzenden getrennten Teilen (20A, 20B, 20C) angeordnet ist.

7. Kopfschutzvorrichtung nach Anspruch 6, bei der sämtliche aneinandergrenzenden getrennten Teile (20A, 20B, 20C) an ihren Endabschnitten mit dem Unterstützungsgriff (11F, 11B) oder Unterstützungsgriffen versehen sind.

8. Kopfschutzairbagvorrichtung nach Anspruch 1, bei der der Airbag (34), eine Aufblaseinrichtung zum Beschicken des Airbags (34) mit einem zum Aufblasen dienenden Gas und mindestens eines der getrennten Teile (20A, 20B, 20C) zu einem Airbagmodul (A1) zusammengebaut sind und bei der (34) die Aufblaseinrichtung und das getrennte Teil am Fahrzeug montierbar sind, indem der Airbagmodul (A1) am Fahrzeug befestigt wird.

9. Kopfschutzairbagvorrichtung nach Anspruch 8, bei der der Airbag (34) eine Vielzahl von Montageabschnitten aufweist, die jeweils ein Montageloch zur Befestigung des Airbags (34) an der Fahrzeugkarosserie besitzen, und bei der eines der getrennten Teile (20A, 20B, 20C) als Bestandteil des Airbagmoduls (A1) eine Vielzahl von Montageelementen umfasst, die zusammen mit den Montageabschnitten des Airbags (34) lösbar an einem Innenpaneel der Fahrzeugkarosserie befestigbar sind, indem sie in das Montageloch des Montageabschnittes des Airbags (34) eingesetzt werden, um auf diese Weise den Airbagmontageabschnitt zu halten, und indem sie dann in ein Montageloch im Innenpaneel eingesetzt werden.

10. Kopfschutzairbagvorrichtung nach Anspruch 9, bei der das getrennte Teil gemäß Anspruch 9 ein zweites Montageelement aufweist, das lösbar am Innenpaneel der Fahrzeugkarosserie befestigbar ist, ohne dass der Montageabschnitt des Airbags (34) in ein Montageloch des Innenpaneels eingesetzt werden muss.

11. Kopfschutzairbagvorrichtung nach Anspruch 1, bei der der Airbag (34) eine Vielzahl von Montageabschnitten zur Befestigung des Airbags (34) an der Fahrzeugkarosserie aufweist und bei der mindestens ein Unterstützungsgriff (11F, 11B) im Anordnungsbereich der Airbagabdeckung (19) angeordnet ist, der im vorderen und hinteren Endbereich mit Befestigungsabschnitten zur Befestigung an der Fahrzeugkarosserie versehen ist, wobei jeder der Befestigungsabschnitte des Unterstützungsgriffs (11F, 11B) ein Halteteil (30) aufweist, das lösbar an einem Innenpaneel der Fahrzeugkarosserie befestigbar ist, indem es in ein Montageloch im Innenpaneel eingesetzt wird, wobei jeder der Befestigungsabschnitte des Unterstützungsgriffs (11F, 11B) zur Befestigung der Montageabschnitte des Airbags (34) und des getrennten Teiles zusammen am Innenpaneel über das Halteteil (30) dient.

12. Kopfschutzairbagvorrichtung nach Anspruch 1, bei der ein Endabschnitt von einem der aneinandergrenzenden getrennten Teile (20A, 20B, 20C) einen Endabschnitt des anderen getrennten Teiles auf der Innenseite überlappt.

13. Kopfschutzairbagvorrichtung nach Anspruch 1, bei der Endabschnitte eines Paares von aneinandergrenzenden getrennten Teilen (20A, 20B, 20C) ein Paar von Anbringungsabschnitten aufweisen, die aneinander anbringbar sind, wodurch die Endabschnitte daran gehindert werden, sich in Vertikalrichtung und in Außen-Innen-Richtung zu verschieben.

14. Kopfschutzairbagvorrichtung nach Anspruch 1, bei der eine Aufblaseinrichtung zum Beschicken des Airbags (34) mit einem zum Aufblasen dienenden Gas über mindestens zwei Montageabschnitte, die vorne und hinten angeordnet sind, an der Fahrzeugkarosserie befestigbar ist und bei der angrenzende Endabschnitte eines Paares von angrenzenden getrennten Teilen (20A, 20B, 20C) zusammen an der Fahrzeugkarosserie befestigt werden, wenn die beiden vorderen und hinteren Montageabschnitte der Aufblaseinrichtung an der Fahrzeugkarosserie befestigt werden.

15. Kopfschutzairbagvorrichtung nach Anspruch 1, die des Weiteren einen separat von den getrennten Teilen (20A, 20B, 20C) ausgebildeten Verbindungsabschnitt (134) aufweist, der zwischen irgendeinem Paar von aneinandergrenzenden getrennten Teilen (20A, 20B, 20C) angeordnet ist, wobei jedes Paar der aneinandergrenzenden getrennten Teile (20A, 20B, 20C) umfasst:
einen Hauptteil zum Abdecken der Innenseite des Airbags (34), der den Türabschnitt (25) umfasst, und einen Montageabschnitt, der in Vorwärts-Rückwärts-Richtung von einem Randabschnitt des Hauptteiles in Richtung auf den Verbindungsabschnitt (134) zur Fixierung an der Fahrzeugkarosserie vorsteht, und wobei der Verbindungsabschnitt (134) umfasst:
einen an der Fahrzeugkarosserie zu befestigenden Montageabschnitt und einen Abdeckabschnitt (135) zur Abdeckung der Innenseite der Montageabschnitte der aneinandergrenzenden getrennten Teile (20A, 20B, 20C), wobei der Abdeckungsabschnitt (135) beim Entfalten des Airbags (34) zusammen mit dem Türabschnitt oder den Türabschnitten (25) der getrennten Teile (20A, 20B, 20C) öffenbar ist, damit der Airbag (34) in das Fahrzeuginnere vorstehen kann.

16. Kopfschutzairbagvorrichtung nach Anspruch 15, bei der der Montageabschnitt des Verbindungsabschnittes (134) zusammen mit den Montageabschnitten der aneinandergrenzenden getrennten Teile (20A, 20B, 20C) an der Fahrzeugkarosserie befestigbar ist.

17. Kopfschutzairbagvorrichtung nach Anspruch 15, bei der der Airbag (34) beim Entfalten zur Abdeckung der Innenseiten der Seitenfenster, die in Vorwärts-Rückwärts-Richtung benachbart zueinander angeordnet sind, und der Innenseite einer Mittelsäule (CP) die zwischen den Seitenfenstern angeordnet ist, dient, und bei der der Verbindungsabschnitt (134) zur Anordnung über der Mittelsäule (CP) dient.

18. Kopfschutzairbagvorrichtung nach Anspruch 17, bei der die Abmessung des Abdeckabschnittes (135) des Verbindungsabschnittes (134) in Vorwärts-Rückwärts-Richtung im Wesentlichen der Abmessung des benachbarten Bereiches des oberen Randes einer Säulengarnierung in Vorwärts-Rückwärts-Richtung entspricht, wobei diese Garnierung die Innenseite der Mittelsäule (CP) abdeckt.

19. Kopfschutzairbagvorrichtung nach Anspruch 15, bei der jeder der Hauptteile der aneinandergrenzenden getrennten Teile (20A, 20B, 20C) einen flossenförmigen Abschnitt im Randabschnitt desselben in Richtung auf den Verbindungsabschnitt (134) umfasst, wobei dieser flossenförmige Abschnitt einstückig mit dem Hauptteil über dem Türabschnitt (25) ausgebildet ist, um gegen die Außenseite des Abdeckabschnittes (134) zu stoßen.

## Revendications

1. Dispositif d'airbag pour la protection de la tête comprenant un airbag (34) et un capot d'airbag (19), un tel dispositif étant approprié pour être monté dans un véhicule de telle manière que l'airbag (34) est plié et agencé à l'intérieur d'un véhicule depuis un montant avant (FP) sur un brancard de toit (RR) dans les périphéries supérieures d'une pluralité de fenêtres latérales tout en étant recouvert par le capot d'airbag (19), le capot d'airbag (19) étant situé sous une garniture de toit (5) et formé séparément de la garniture de toit (5) ; et l'airbag (34) se gonfle lorsque alimenté par un gaz de gonflage, pousse et ouvre une partie de porte (25) formée dans la périphérie inférieure du capot d'airbag (19), puis fait saillie pour recouvrir les fenêtres latérales, **caractérisé en ce que** :
le capot d'airbag (19) comprend une pluralité de composants divisés dans la direction avant-arrière ; et
le composant divisé (20A) situé le plus à l'avant doit recouvrir le côté intérieur du montant avant (FP), et se déployer jusqu'à une zone la plus à l'arrière d'une intersection du montant avant (FP) et du brancard de toit (RR).

2. Dispositif d'airbag pour la protection de la tête selon la revendication 1, dans lequel un joint de moulage entre le composant divisé le plus à l'avant (20A) et un composant divisé suivant (20B) doit être situé à proximité de la tête d'un occupant assis sur le siège avant, ou à l'arrière de la tête de l'occupant.

3. Dispositif d'airbag pour la protection de la tête selon la revendication 1, dans lequel un composant divisé (20C) situé le plus à l'arrière doit recouvrir au moins un composant supérieur d'un montant arrière (RP) à l'intérieur du véhicule.

4. Dispositif d'airbag pour la protection de la tête selon la revendication 1, dans lequel :
au moins une poignée de maintien (11F, 11B) est située dans la zone d'agencement du capot d'airbag (19), la poignée de maintien (11F, 11B) étant dotée aux extrémités avant et arrière de parties de fixation pour fixation à la carrosserie du véhicule ;
les parties de fixation avant et arrière de la poignée de maintien (11F, 11B) sont situées à travers des parties d'extrémité contiguës d'une paire de composants divisés contigus (20A, 20B, 20C) du capot d'airbag (19) ; et
les parties d'extrémité des composants divisés contigus (20A, 20B, 20C) sont attachées conjointement à la carrosserie du véhicule lorsque les parties de fixation sont fixées à la carrosserie du véhicule.

5. Dispositif d'airbag pour la protection de la tête selon la revendication 4, dans lequel chacune des parties de fixation de la poignée de maintien (11F, 11B) comprend un élément de retenue (30), l'élément de retenue (30) étant fixable de manière détachable à un panneau interne de la carrosserie du véhicule en étant inséré dans un trou de montage dans le panneau interne.

6. Dispositif d'airbag pour la protection de la tête selon la revendication 4, dans lequel :
le capot d'airbag (19) inclut plus de deux composants (20) divisés dans la direction avant-arrière ; et
la poignée de maintien (11F, 11B) est située à travers au moins une paire de composants divisés contigus (20A, 20B, 20C).

7. Dispositif d'airbag pour la protection de la tête selon la revendication 6, dans lequel tous les composants divisés contigus (20A, 20B, 20C) sont dotés au niveau de leurs parties d'extrémités de la poignée de maintien (11F, 11B).

8. Dispositif d'airbag pour la protection de la tête selon la revendication 1, dans lequel :
l'airbag (34), un gonfleur destiné à alimenter l'airbag (34) avec un gaz de gonflage, et au moins l'un des composants divisés (20A, 20B, 20C) sont assemblés en un module d'airbag (A1) ; et
l'airbag (34), le gonfleur et le composant divisé peuvent être montés sur le véhicule en attachant le module d'airbag (A1) au véhicule.

9. Dispositif d'airbag pour la protection de la tête selon la revendication 8, dans lequel
l'airbag (34) inclut une pluralité de parties de montage, chacune possédant un trou de montage, destiné à attacher l'airbag (34) à la carrosserie du véhicule ; et
l'un des composants divisés (20A, 20B, 20C) en tant que composant du module d'airbag (A1) comprend une pluralité d'éléments de montage fixables de manière détachable à un panneau interne de la carrosserie du véhicule conjointement aux parties de montage de l'airbag (34) en étant insérés dans le trou de montage de la partie de montage de l'airbag (34), retenant ainsi la partie de montage d'airbag, et en étant ensuite insérés dans un trou de montage dans le panneau interne.

10. Dispositif d'airbag pour la protection de la tête selon la revendication 9, dans lequel le composant divisé tel que défini dans la revendication 9 comprend un deuxième élément de montage fixable de manière détachable au panneau interne de la carrosserie du véhicule sans impliquer la partie de montage de l'airbag (34) en étant inséré dans un trou de montage du panneau interne.

11. Dispositif d'airbag pour la protection de la tête selon la revendication 1, dans lequel
l'airbag (34) inclut une pluralité de parties de montage destinées à attacher l'airbag (34) à la carrosserie du véhicule ; et au moins une poignée de maintien (11F, 11B) est située dans la zone d'agencement du capot d'airbag (19), la poignée de maintien (11F, 11B) étant dotée dans les extrémités avant et arrière de parties de fixation pour fixation à la carrosserie du véhicule ;
chacune des parties de fixation de la poignée de maintien (11F, 11B) comprend un élément de retenue (30), l'élément de retenue (30) étant fixable de manière détachable à un panneau interne de la carrosserie du véhicule en étant inséré dans un trou de montage dans le panneau interne ; et
chacune des parties de fixation de la poignée de maintien (11F, 11B) destinées à fixer les parties de montage de l'airbag (34) et le composant divisé conjointement au panneau interne par l'élément de retenue (30).

12. Dispositif d'airbag pour la protection de la tête selon la revendication 1, dans lequel une partie d'extrémité de l'un des composants divisés contigus (20A, 20B, 20C) chevauche une partie d'extrémité de l'autre composant divisé sur le côté intérieur.

13. Dispositif d'airbag pour la protection de la tête selon la revendication 1, dans lequel des parties d'extrémité d'une paire de composants divisés contigus (20A, 20B, 20C) comprend une paire de parties d'ajustement ajustables l'une à l'autre,
moyennant quoi les parties d'extrémité sont empêchées de se déplacer dans la direction verticale et dans la direction extérieur-intérieur.

14. Dispositif d'airbag pour la protection de la tête selon la revendication 1, dans lequel :
un gonfleur destiné à alimenter l'airbag (34) avec un gaz de gonflage est attachable à la carrosserie du véhicule par au moins deux parties de montage situées à l'avant et l'arrière de celui-ci ; et
des parties d'extrémité contiguës d'une paire de composants divisés contigus (20A, 20B, 20C) sont fixées à la carrosserie du véhicule Conjointement lorsque les deux parties de montage avant et arrière du gonfleur sont fixées à la carrosserie du véhicule.

15. Dispositif d'airbag pour la protection de la tête selon la revendication 1, dans lequel :
le dispositif comprend en outre une partie de joint (134) formée séparément des composants divisés (20A, 20B, 20C), la partie de joint (134) étant située entre une quelconque paire de composants divisés contigus (20A, 20B, 20C) ;
chacun de la paire des composants divisés contigus (20A, 20B, 20C) comprend :
un corps principal destiné à recouvrir le côté intérieur de l'airbag (34), le corps principal incluant la partie de porte (25) ; et une partie de montage faisant saillie dans la direction avant-arrière depuis une partie de rebord du corps principal en direction de la partie de joint (134) devant être fixée à la carrosserie du véhicule ;
et la partie de joint (134) comprend :
une partie de montage devant être fixée à la carrosserie du véhicule ; et
une partie de capot (135) destinée à recouvrir le côté intérieur des parties de montage des composants divisés contigus (20A, 20B, 20C), la partie de capot (135) étant ouvrable lors du déploiement de l'airbag (34), conjointement à la partie de porte (25) des composants divisés (20A, 20B, 20C), pour permettre à l'airbag (24) de faire saillie en direction de l'intérieur du véhicule.

16. Dispositif d'airbag pour la protection de la tête selon la revendication 15, dans lequel la partie de montage de la partie de joint (134) est attachable à la carrosserie du véhicule conjointement aux parties de montage des composants divisés contigus (20A, 20B, 20C).

17. Dispositif d'airbag pour la protection de la tête selon la revendication 15, dans lequel :
l'airbag (34) lors de son déploiement doit recouvrir les côtés intérieurs des fenêtres latérales juxtaposées dans la direction avant-arrière et le côté intérieur d'un montant du milieu (CP) situé entre les fenêtres latérales ; et
la partie de joint (134) doit être située au-dessus du montant du milieu (CP).

18. Dispositif d'airbag pour la protection de la tête selon la revendication 17, dans lequel la dimension de la partie de capot (135) de la partie de joint (134) dans la direction avant-arrière est sensiblement la même que la dimension à proximité du rebord supérieur d'une garniture de montant dans la direction avant-arrière, la garniture recouvrant le côté intérieur du montant du milieu (CP).

19. Dispositif d'airbag pour la protection de la tête selon la revendication 15, dans lequel chacun des corps principaux des composants divisés contigus (20A, 20B, 20C) inclut un ergot dans sa partie de rebord en direction de la partie de joint (134), l'ergot étant formé en un bloc avec le corps principal au-dessus de la partie de porte (25) pour venir en butée contre le côté extérieur de la partie de capot (135).
